# EUROPÄISCHE PATENTSCHRIFT

(11) **EP 1 990 387 B1**
(45) Veröffentlichungstag und Bekanntmachung des Hinweises auf die Patenterteilung: **21.07.2010**
(21) Anmeldenummer: 07108058.4
(22) Anmeldetag: 11.05.2007
(51) Int. Cl.: C09J 5/02, C09J 175/04, C08G 18/00, B32B 27/08, B32B 27/40, B32B 7/12, B29C 65/48

(54) **Über Polyurethan-Heissschmelzklebstoff verbundene Schichtbundkörper sowie Verfahren zum Verkleben von Weichmacher enthaltenden Kunststoffen**
Composite layer body joined with polyurethane holt melt glue and method for gluing plastics containing dilutents
Corps de couche composite lié par de la matière collante transdermique tout comme procédé de collage de plastifiants comprenant du plastique

(43) Veröffentlichungstag der Anmeldung: 12.11.2008
(73) Patentinhaber: Sika Technology AG, 6340 Baar (CH)
(72) Erfinder: Paschkowski, Kai, 21635, Jork (DE); Janke, Doreen, 25486 Alveslohe (DE); Slongo, Mario, 1712, Tafers (CH); Burckhardt, Urs, 8049, Zürich (CH)
(74) Vertreter: Sika Patent Attorneys

(56) Entgegenhaltungen:
- EP-A- 0 254 177
- EP-A- 1 524 282
- EP-A- 1 770 107
- WO-A-03/031490
- WO-A-2006/050242
- DE-A1- 4 343 468

## Beschreibung

### Technisches Gebiet

Die Erfindung betrifft das Gebiet der Isocyanatgruppen aufweisenden Heissschmelzklebstoffe und das Verkleben von Weichmacher enthaltenden Kunststoffen, insbesondere von Folien.

### Stand der Technik

Heissschmelzklebstoffe (Hotmelts) sind Klebstoffe, welche auf thermoplastischen Polymeren basieren. Diese Polymere sind bei Raumtemperatur fest, erweichen beim Erwärmen zu viskosen Flüssigkeiten und können somit als Schmelze appliziert werden. Im Unterschied zu den sogenannten Warmschmelzklebstoffen (Warmmelts), welche eine pastöse Konsistenz haben und bei leicht erhöhten Temperaturen, typischerweise im Bereich von 40 bis 80 °C, appliziert werden, erfolgt die Applikation der Heissschmelzklebstoffe bei Temperaturen ab 80 °C, typischerweise ab 85 °C. Beim Abkühlen auf Raumtemperatur verfestigen sie sich unter gleichzeitigem Aufbau der Klebefestigkeit. Klassische Heissschmelzklebstoffe sind nicht-reaktive Klebstoffe. Bei Erwärmung erweichen oder schmelzen sie wieder, wodurch sie sich für einen Einsatz bei erhöhter Temperatur nicht eignen. Zudem neigen klassische Heissschmelzklebstoffe oft auch bei Temperaturen weit unterhalb des Erweichungspunkts zum Kriechen (kalter Fluss).

Diese Nachteile wurden bei den sogenannten reaktiven Heissschmelzklebstoffen durch das Einbringen von reaktiven, zur Vernetzung führenden Gruppen in die Polymerstruktur weitgehend behoben. Als reaktive Heissschmelzklebstoffe besonders geeignet sind Polyurethanzusammensetzungen, kurz auch PUR-RHM genannt. Diese bestehen üblicherweise aus Isocyanatgruppen aufweisenden Polyurethanpolymeren, die durch Umsetzung geeigneter Polyole mit einem Überschuss an Diisocyanaten erhalten werden. Nach ihrer Applikation bauen sie durch Abkühlen schnell eine hohe Klebefestigkeit auf und erhalten ihre Endeigenschaften, insbesondere Wärmestandfestigkeit und Beständigkeit gegenüber Umwelteinflüssen, durch die Vernetzung des Polyurethanpolymers infolge der Reaktion der Isocyanatgruppen mit Feuchtigkeit. Bedingt durch das bei der Vernetzungsreaktion entstehende Kohlendioxid-Gas besteht aber die Gefahr, dass im Klebstoff Blasen entstehen, die die Endfestigkeit und die Haftung zu den Substraten vermindern sowie, im Fall von sichtbaren Verklebungen, beispielsweise im Verpackungsbereich, die Ästhetik beeinträchtigen können. Zur Blasenbildung neigen insbesondere amorphe PUR-RHM, da die von der Oberfläche her entstehende Haut aus ausgehärtetem Klebstoff für Kohlendioxid äusserst undurchlässig ist. Gleichzeitig lässt die Haut auch kaum Feuchtigkeit in die tiefer liegenden, noch nicht ausgehärteten Klebstoffschichten eindringen, so dass die vollständige Vernetzung bei solchen Klebstoffen überaus viel Zeit braucht oder gar nicht zustande kommt.

Im Gebiet der bei Raumtemperatur applizierten einkomponentigen Polyurethane sind blasenfrei aushärtende Systeme bekannt. Sie enthalten üblicherweise latente Härter, insbesondere Aldimine. WO 2004/013200 A1 beschreibt bei Raumtemperatur applizierbare, Polyaldimine enthaltende Zusammensetzungen, die ohne störenden Geruch aushärten. WO 2007/036574 A1 offenbart bei Raumtemperatur applizierbare Zusammensetzungen enthaltend Aldimin-haltige Verbindungen, welche aus Polyisocyanaten und Aldiminen mit aktiven Wasserstoff aufweisenden Gruppen erhältlich sind. WO 2007/036575 A1 offenbart Zusammensetzungen enthaltend bei Raumtemperatur feste Aldimingruppen aufweisende Polyurethanpolymeren, welche als reaktive Polyurethan-Heissschmelzklebstoffe einsetzbar sind.

Kunststoffe werden schon seit langem mit Heissschmelzklebstoffen verklebt. Insbesondere werden sie als Folie in Kaschierungen auf Träger aufgeklebt. Als Kunststoffe werden oft Weichmacher enthaltende Kunststoffe eingesetzt, insbesondere als Folien. Ein technisch häufig verwendeter Weichmacher enthaltender Kunststoff ist Weich-Polyvinylchlorid (Weich-PVC).

So wird in WO 03/031490 A1 und DE 43 43 468 A1 die Verwendung von Polyurethanschmelzklebstoffen für das Kaschieren von PVC-Fensterprofilen offenbart. In DE 43 43 468 A1 ist eine Vorbehandlung des PVC vor dem Verkleben mittels Corona-Behandlung notwendig, während in WO 03/031490 A1 eine Vorbehandlung des PVC als bevorzugt offenbart wird.

Beim Verkleben von Weichmacher enthaltenden Kunststoffen mit Heissschmelzklebstoffen, insbesondere reaktiven Polyurethan-Heissschmelzklebstoffen, zeigt sich jedoch sehr häufig das Problem, dass die Haftung des Klebstoffs zum Kunststoff durch den im Kunststoff enthaltenen Weichmacher negativ beeinflusst wird und sich die Festigkeit des Klebverbundes schon bald nach dessen Herstellung zu vermindern beginnt, was mit der Zeit bis zum vollständigen Haftverlust führen kann. Aufgrund der Tatsache, dass der Weichmacher des Weichmacher enthaltenden Kunststoffes in einem Klebverbund mit einem Weichmacher-freien Substrat zuweilen sogar auf der Oberfläche des Weichmacher-freien Substrates nachgewiesen werden kann, muss davon ausgegangen werden, dass der Weichmacher in grosser Menge aus dem Weichmacher enthaltenden Kunststoff in den Klebstoff und zuweilen sogar vollständig durch den Klebstoff hindurch migriert. Eine derartige Migration eines Weichmachers ist jedoch äusserst unerwünscht, da dadurch einerseits, wie bereits erwähnt, der Klebstoff seine Haftung zum Kunststoff schleichend verlieren kann, und andererseits der Weichmachergehalt des Kunststoffes stark reduziert werden kann, was zu dessen Versprödung führen kann.

### Darstellung der Erfindung

Die Aufgabe der vorliegenden Erfindung ist es daher, die Nachteile der Verklebung von Weichmacher enthaltenden Kunststoffen mit reaktiven Polyurethan-Heissschmelzklebstoffen, insbesondere den schleichenden Haftungsverlust, zu beheben, beziehungsweise zu reduzieren.

Überraschenderweise wurde nun gefunden, dass mit einem Schichtverbundkörper gemäss Anspruch 1 dieses Problem gelöst werden kann. Wesentlich zu dieser Lösung trägt die Verwendung von Aldiminen im Heissschmelzklebstoff bei.

Es hat sich gezeigt, dass in einem derartigen Schichtverbundkörper die Haftung des Aldimin enthaltenden Klebstoffs zu den Substraten besser ist und sich im zeitlichen Verlauf deutlich weniger stark vermindert, als dies in einem entsprechenden Schichtverbundkörper ohne Aldimin im Klebstoff der Fall ist. Insbesondere konnten deutlich höhere Werte für die Rollschälfestigkeit, vor allem nach Wärme-/Feucht- bzw. Wechsellagerung, gemessen werden. Ausserdem zeigte sich, dass die Migration des Weichmachers aus dem Weichmacher enthaltenden Kunststoff in den Klebstoff deutlich geringer ist. Weiterhin hat sich überraschenderweise gezeigt, dass der durch Wärme-/Feucht- bzw. Wechsellagerung verursachte Abfall in den mechanischen Eigenschaften des Klebstoffs deutlich geringer ist.

In einem weiteren Aspekt betrifft die Erfindung eine beschichtete Kunststofffolie gemäss Anspruch 18, sowie ein Verfahren zum Verkleben von einem Weichmacher enthaltenden Kunststoff gemäss Anspruch 19, sowie die daraus resultierenden Artikel gemäss Anspruch 38.

Bevorzugte Ausführungen der Erfindung sind Gegenstand der abhängigen Ansprüche.

### Wege zur Ausführung der Erfindung

Die vorliegende Erfindung betrifft in einem ersten Aspekt einen Schichtverbundkörper, welcher
a) mindestens ein Substrat **S1;**
b) mindestens einen Heissschmelzklebstoff K; und
c) mindestens ein Substrat **S2**
aufweist. Der Heissschmelzklebstoff umfasst hierbei mindestens ein bei Raumtemperatur festes, Isocyanatgruppen aufweisendes Polyurethanpolymer **P** und mindestens ein Aldimin **A.**

Das Substrat **S1** (erstes Substrat) ist hierbei mit dem Substrat **S2** (zweites Substrat) über den Heissschmelzklebstoff **K** miteinander verbunden, wobei das Substrat **S1** und/oder das Substrat **S2** gegebenenfalls mit einem Primer vorbehandelt sind. Weiterhin ist das Substrat **S1** und/oder das Substrat **S2** ein Weichmacher enthaltender Kunststoff.

Das Substrat **S1,** der Klebstoff **K** und das Substrat **S2** bilden hierbei einen schichtenartigen Aufbau, welcher nach Verfestigung, bzw. nach Aushärtung, des Klebstoffes in der Lage ist, hohe Kräfte zwischen den zwei Substraten zu übertragen.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Als "Raumtemperatur" wird eine Temperatur von 25 °C bezeichnet.

Mit "Poly" beginnende Substanznamen wie Polyaldimin, Polyisocyanat, Polyol oder Polyamin bezeichnen im vorliegenden Dokument Substanzen, die formal zwei oder mehr der in ihrem Namen vorkommenden funktionellen Gruppen pro Molekül enthalten.

Der Begriff "primäre Aminogruppe" bezeichnet im vorliegenden Dokument eine NH₂-Gruppe, die an einen organischen Rest gebunden ist, während der Begriff "sekundäre Aminogruppe" eine NH-Gruppe bezeichnet, die an zwei organische Reste, welche auch gemeinsam Teil eines Rings sein können, gebunden ist.

Als "aliphatische Aminogruppe" wird eine Aminogruppe bezeichnet, die an einen aliphatischen, cycloaliphatischen oder arylaliphatischen Rest gebunden ist. Sie unterscheidet sich damit von einer "aromatischen Aminogruppe", welche direkt an einen aromatischen oder heteroaromatischen Rest gebunden ist, wie beispielsweise in Anilin oder 2-Aminopyridin.

Für die Erfindung ist es wesentlich, dass zumindest eines der Substrate **S1** und **S2** ein Weichmacher enthaltender Kunststoff ist.

Als Weichmacher enthaltende Kunststoffe sind insbesondere Weich-Polyvinylchlorid (Weich-PVC) und Ethylen/Propylen/Dien-Terpolymere (EPDM) und Polyurethane zu betrachten. Als besonders bevorzugter Weichmacher enthaltender Kunststoff gilt Weich-PVC.

Als Weichmacher gelten für diese Erfindung insbesondere Phthalate, wie Dioctylphthalat, Diisononylphthalat, Diisodecylphthalat, Diisoundecylphthtalat und Diisotridecylpthalat, Mischphthalate, insbesondere von Benzyltypen; Adipin- und Sebacinsäureester wie Dioctyladipat und Dioctylsebacat; Fettsäureester; und Phosphate, wie Tricresylphosphat, Epoxidierte Sojaöle oder Leinöle, Benzoesäureester oder Sulfonsäureester.

Als Substrat **S1** und/oder **S2** kommen grundsätzlich verschiedenste Materialien in Frage. Insbesondere handelt es sich hierbei um einen Kunststoff, insbesondere einen thermoplastischen Kunststoff, bevorzugt um einen Kunststoff, welcher ausgewählt ist aus der Gruppe bestehend aus Polyolefinen, wie Polypropylen (PE), Polypropylen (PP), Polybutylen (PB); Poly(meth)acrylaten, wie Poly(methylmethacrylat) (PMMA); Polystyrol (PS), Polyamide, wie Polyamid (PA), wie zum Beispiel Polyamid 11, Polyamid 12 oder Polyamid 66; Polycarbonat (PC), Acrylonitril-Butadien-Styrol-Copolymere (ABS), Hart-Polyvinylchlorid (Hart-PVC), Weichmacher enthaltende Kunststoffe, insbesondere Weich-Polyvinylchlorid (Weich-PVC), Ethylen/Propylen/Dien-Terpolymere (EPDM) und Polyurethane; Mischungen dieser Kunststoffe und deren Verbundwerkstoffe (Composites).

Als "Verbundwerkstoff" oder "Composite" wird in diesem Dokument ein Werkstoff bezeichnet, in welchem zumindest ein Kunststoff mit mindestens einem weiteren Werkstoff kombiniert ist. Insbesondere geeignet sind Verbundwerkstoffe, welche Fasern und Kunststoffe enthalten.

Als Substrate **S1** und **S2** werden neben den Weichmacher enthaltenden Kunststoffen insbesondere ABS und PC sowie deren Mischungen und Verbundwerkstoffe bevorzugt.

Die Substrate **S1** und/oder **S2** können bei Bedarf vorbehandelt sein. Eine derartige Vorbehandlung kann mechanischer, chemischer oder physikochemischer Art sein. Beispiele für Vorbehandlungen sind Schleifen, Sandstrahlen, Bürsten, Behandeln mit Reinigern oder Lösemitteln, Aufbringen eines Haftvermittlers, einer Haftvermittlerlösung oder eines Primers, Behandeln mit Plasma, Corona oder Flammen. Falls es sich beim Substrat um ein Polyolefin handelt, ist vor dem Verkleben eine Vorbehandlung mit Plasma, Corona oder Flammen, insbesondere durch ein Luft-Plasma bei atmosphärischem Umgebungsdruck, zur Erreichung einer genügenden Anfangshaftung empfehlenswert. Luft-Plasma-Vorbehandlungen bei atmosphärischen Umgebungsdruck werden insbesondere durch unter Verwendung von Plasmaquellen, wie sie im Detail in EP 0 761 415 A1 und EP 1 335 641 A1 beschrieben und bei der Firma Plasmatreat GmbH, Steinhagen, Deutschland kommerziell erhältlich sind, insbesondere durch die sogenannte OpenAir^{®}-Plasma-Technologie, durchgeführt.

In einer besonders bevorzugten Ausführungsform handelt es sich bei dem einen Substrat (**S1** bzw.**S2**) um Weich-PVC und beim anderen Substrat (**S2** bzw. **S1**) um Polycarbonat (PC) oder ein Acrylonitril-Butadien-Styrol-Copolymer (ABS) oder eine PC/ABS-Mischung oder einen PC/ABS-Verbundwerkstoff.

In einer anderen besonders bevorzugten Ausführungsform sind beide Substrate **S1** und **S2** Weich-Polyvinylchlorid (Weich-PVC).

Es ist bevorzugt, wenn zumindest eines der beiden Substrate **S1** und/oder **S2** in Form einer Folie vorliegt. Als Folie werden insbesondere biegsame flächige Kunststoffe in einer Dicke von 0.05 Millimeter bis 5 Millimeter verstanden, die sich aufrollen lassen. Somit werden neben "Folien" im strengen Sinn von Dicken unter 1 mm, auch Abdichtungsbahnen, wie sie typischerweise zum Abdichten von Tunnels, Dächern oder Schwimmbädern verwendet werden und welche eine Dicke von typischerweise 1 bis 3 mm, in Spezialfällen sogar bis 5 mm, aufweisen, verstanden. Derartige Kunststofffolien werden üblicherweise durch Streichen, Giessen, Kalandrieren oder Extrusion hergestellt und sind typischerweise in Rollen kommerziell erhältlich oder werden vor Ort hergestellt. Sie können einschichtig oder mehrschichtig aufgebaut sein.

Der Heissschmelzklebstoff **K** enthält mindestens ein bei Raumtemperatur festes, Isocyanatgruppen aufweisendes Polyurethanpolymer **P** und mindestens ein Aldimin **A.** Der Heissschmelzklebstoff ist somit ein feuchtigkeitsreaktiver Polyurethan-Heissschmelzklebstoff (PUR-RHM).

Das bei Raumtemperatur feste, Isocyanatgruppen aufweisende Polyurethanpolymer **P** ist erhältlich durch die Umsetzung von mindestens einem Polyol mit mindestens einem Polyisocyanat.

Als Polyole geeignet sind insbesondere Polyetherpolyole, Polyesterpolyole und Polycarbonatpolyole, sowie Mischungen dieser Polyole.

Als Polyetherpolyole, auch Polyoxyalkylenpolyole genannt, sind insbesondere jene geeignet, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.

Als Polyetherpolyole besonders geeignet sind Polyoxyalkylendiole und -triole, insbesondere Polyoxyalkylendiole. Besonders geeignete Polyoxyalkylendi- und triole sind Polyoxyethylendi- und -triole sowie Polyoxypropylendi- und -triole.

Besonders geeignet sind Polyoxypropylendiole und -triole mit einem Ungesättigtheitsgrad tiefer als 0.02 mEq/g und einem Molekulargewicht im Bereich von 1000 bis 30'000 g/mol, sowie Polyoxypropylendiole und -triole mit einem Molekulargewicht von 400 bis 8'000 g/mol. Unter ,Molekulargewicht' oder 'Mol gewicht' versteht man im vorliegenden Dokument stets das Molekulargewichtsmittel Mₙ. Insbesondere geeignet sind Polyoxypropylendiole mit einem Ungesättigtheitsgrad tiefer als 0.02 mEq/g und einem Molekulargewicht im Bereich von 1000 bis 12'000, insbesondere zwischen 1000 und 8000 g/mol. Solche Polyetherpolyole werden beispielsweise unter dem Handelsnamen Acclaim^{®} von Bayer vertrieben.

Ebenfalls besonders geeignet sind sogenannte "EO-endcapped" (ethylene oxide-endcapped) Polyoxypropylendiole und -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.

Als Polyesterpolyole geeignet sind mindestens zwei Hydroxylgruppen tragende Polyester, welche nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.

Besonders geeignete Polyesterpolyole sind Polyesterdiole. Insbesondere geeignete Polyesterdiole sind solche hergestellt aus Adipinsäure, Azelainsäure, Sebacinsäure, Dodecandicarbonsäure, Dimerfettsäure, Phthalsäure, Isophthalsäure und Terephthalsäure als Dicarbonsäure und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol. Insbesondere geeignet sind auch Polyesterdiole hergestellt aus ε-Caprolacton und einem der vorgenannten zweiwertigen Alkohole als Starter.

Die Polyesterpolyole weisen vorteilhaft ein Molekulargewicht von 1000 bis 15'000 g/mol, insbesondere von 1500 bis 8000 g/mol, insbesondere von 1700 bis 5500 g/mol, auf.

Insbesondere geeignet sind bei Raumtemperatur flüssige, amorphe, teilkristalline und kristalline Polyesterdi- und -triole, insbesondere Polyesterdiole. Geeignete bei Raumtemperatur flüssige Polyesterpolyole sind nicht weit unterhalb von Raumtemperatur fest, beispielsweise bei Temperaturen zwischen 0°C und 25°C, und werden vorzugsweise in Kombination mit mindestens einem amorphen, teilkristallinen oder kristallinen Polyesterpolyol eingesetzt. Besonders geeignet sind amorphe Polyesterdiole, sowie Mischungen aus amorphen und bei Raumtemperatur flüssigen Polyesterdiolen.

Als Polycarbonatpolyole geeignet sind jene, wie sie durch Polykondensation beispielsweise der oben genannten - zum Aufbau der Polyesterpolyole eingesetzten - zwei- oder dreiwertigen Alkohole mit Dialkylcarbonaten, wie Dimethylcarbonat, Diarylcarbonaten, wie Diphenylcarbonat, oder Phosgen zugänglich sind.

Besonders geeignet sind Polycarbonatdiole, insbesondere amorphe Polycarbonatdiole.

Als Polyole ebenfalls geeignet sind mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen.

Als Polyole bevorzugt sind Polyesterpolyole und Polycarbonatpolyole, insbesondere Polyesterdiole und Polycarbonatdiole.

Besonders bevorzugt sind amorphe Polyesterdiole und amorphe Polycarbonatdiole, sowie Mischungen aus amorphen und bei Raumtemperatur flüssigen Polyester- oder Polycarbonatdiolen.

Am meisten bevorzugt sind Polyesterdiole, insbesondere amorphe Polyesterdiole, sowie Mischungen aus amorphen und bei Raumtemperatur flüssigen Polyesterdiolen.

Als Polyisocyanate für die Herstellung eines Polyurethanpolymers **P** können handelsübliche aliphatische, cycloaliphatische oder aromatische Polyisocyanate, insbesondere Diisocyanate, verwendet werden, beispielsweise die folgenden:
1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat und beliebige Gemische dieser Isomeren, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), Oligomere und Polymere der vorgenannten Isocyanate, sowie beliebige Mischungen der vorgenannten isocyanate. Bevorzugt sind MDI, TDI, HDI und IPDI. Besonders bevorzugt sind MDI und IPDI.

Die Herstellung des Polyurethanpolymers **P** erfolgt in bekannter Art und Weise direkt aus den Polyisocyanaten und den Polyolen, oder durch schrittweise Adduktionsverfahren, wie sie auch als Kettenverlängerungsreaktionen bekannt sind.

In einer bevorzugten Ausführungsform wird das Polyurethanpolymer **P** über eine Reaktion von mindestens einem Polyisocyanat und mindestens einem Polyol hergestellt, wobei die Isocyanatgruppen gegenüber den Hydroxylgruppen im stöchiometrischen Überschuss vorliegen. Vorteilhaft beträgt das Verhältnis zwischen Isocyanat- und Hydroxylgruppen 1.3 bis 2.5, insbesondere 1.5 bis 2.2.

Das Polyurethanpolymer **P** ist bei Raumtemperatur fest. Es kann dabei kristallin, teilkristallin oder amorph sein. Für ein teilkristallines oder amorphes Polyurethanpolymer **P** gilt dabei, dass es bei Raumtemperatur nicht oder nur wenig fliessfähig ist, das heisst insbesondere, dass es bei 20 °C eine Viskosität von mehr als 5'000 Pa·s aufweist.

Das Polyurethanpolymer **P** weist ein Molekulargewicht von vorzugsweise über 1000 g/mol, insbesondere ein solches zwischen 1200 und 50'000 g/mol, bevorzugt ein solches zwischen 2000 und 30'000 g/mol, auf.

Weiterhin weist es vorteilhaft eine mittlere Funktionalität im Bereich von 1.8 bis 2.2 auf.

Bevorzugt ist das Polyurethanpolymer **P** transparent. Typischerweise werden zur Herstellung eines transparenten, bei Raumtemperatur festen Polyurethanpolymers entweder amorphe Polyole oder eine Mischung von bei Raumtemperatur flüssigen und amorphen Polyolen verwendet.

Vorzugsweise ist das Polyurethanpolymer **P** amorph. Weiter ist das Polyurethanpolymer **P** vorzugsweise transparent, sowohl vor als auch nach dem Vernetzen mit Feuchtigkeit.

Üblicherweise ist das Polyurethanpolymer **P** in einer Menge von 40 - 98 Gewichts-%, insbesondere von 60 - 98 Gewichts-%, bevorzugt von 80 - 98 Gewichts-%, bezogen auf den Heissschmelzklebstoff **K**, vorhanden.

Der Heissschmelzklebstoff **K** enthält weiterhin mindestens ein Aldimin **A.** Als Aldimin **A** können grundsätzlich alle bekannten Aldimine eingesetzt werden, insbesondere Polyaldimine sowie Monoaldimine, welche neben der Aldiminogruppe noch mindestens eine Isocyanatgruppe aufweisen.

Aldimine **A** lassen sich aus primären Aminen und Aldehyden herstellen. Als Aldehyde sind beispielsweise Propanal, 2-Methylpropanal, Butanal, 2-Methylbutanal, 2-Ethylbutanal, Pentanal, 2-Methylpentanal, 3-Methylpentanal, 4-Methylpentanal, 2,3-Dimethylpentanal, Hexanal, 2-Ethyl-hexanal, Heptanal, Octanal, Nonanal, Decanal, Undecanal, 2-Methyl-undecanal, Dodecanal, Methoxyacetaldehyd, Cyclopropancarboxaldehyd, Cyclopentancarboxaldehyd, Cyclohexancarboxaldehyd und Diphenylacetaldehyd geeignet.

Insbesondere werden jedoch die Aldimine **A** der Formel (I-A) und (I-B) bevorzugt. Besonders bevorzugte derartige Aldimine **A** sind in WO 2004/013088 A1, WO2007/036575 A1, WO2007/036571 A1, WO2007/036574 A1 und WO 2007/036572 A1 beschrieben, welche hiermit durch Referenz in die Offenbarung der hier vorliegenden Erfindung miteingebunden werden.

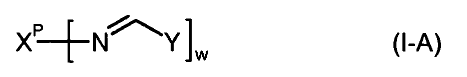

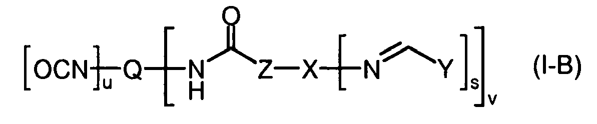

Diese bevorzugten Aldimine **A** zeichnen sich dadurch aus, dass ihre Aldiminogruppen nicht zu Enaminogruppen tautomerisieren können, da sie in α-Stellung zum C-Atom der Aldiminogruppe kein Wasserstoffatom aufweisen. Dies führt zu besonders lagerstabilen Heissschmelzklebstoffen.

In einer Ausführungsform ist das Aldimin **A** ein Aldimin der Formel (I-A); dieses stellt ein Polyaldimin dar.

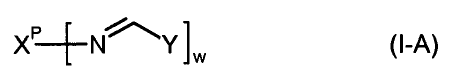

Hierbei steht X^{p} für ein Polyamin mit w primären Aminogruppen nach Entfernung von w primären Aminogruppen, w steht für eine ganze Zahl von 2 - 8, insbesondere von 2 - 4, bevorzugt für 2 oder 3, und Y steht für einen Rest der Formel (I a) oder (I b), 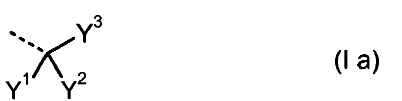 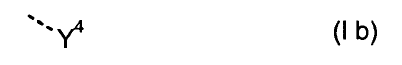 wobei
Y¹ und Y² entweder
unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen ist, stehen;
Y³ für einen einwertigen Kohlenwasserstoffrest, welcher gegebenenfalls mindestens ein Heteroatom, insbesondere Sauerstoff in Form von Ether-, Carbonyl- oder Ester-Gruppen, aufweist, steht; und
Y⁴ entweder
für eine substituierte oder unsubstituierte Aryl- oder Heteroaryl-Gruppe, welche eine Ringgrösse von 5 bis 8, bevorzugt 6, Atomen aufweist, steht,
oder für 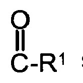 steht, wobei R¹ für ein Wasserstoffatom oder für eine Alkoxygruppe steht,
oder für eine substituierte oder unsubstituierte Alkenyl- oder Arylalkenylgruppe mit 1 bis 30 C-Atomen steht.

Polyamine, welche sich vom Rest X^{P} ableiten, weisen die Formel (IV-A) auf.

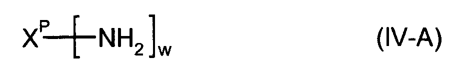

Geeignete Polyamine der Formel (IV-A) sind insbesondere Polyamine mit aliphatischen primären Aminogruppen, beispielsweise die folgenden:
- Aliphatische Diamine wie Ethylendiamin, 1,3-Propandiamin, 2-Methyl-1,2-propandiamin, 2,2-Dimethyl-1,3-propandiamin, 1,4-Butandiamin, 1,5-Pentandiamin, 1,6-Hexamethylendiamin, 1,7-Heptandiamin, 1,8-Octandiamin, 1,9-Nonandiamin, 1,10-Decandiamin, 1,11-Undecandiamin, 1,12-Dodecandiamin, Methyl-bis-(3-aminopropyl)amin, 1,5-Diamino-2-methylpentan (MPMD), 2,5-Dimethyl-1,6-hexamethylendiamin, 1,2-Propandiamin, 2-Methyl-1,2-propandiamin, 1,3-Butandiamin, 1,3-Diaminopentan (DAMP), 2,2,4-Trimethylhexamethylendiamin (TMD), 1,5-Diamino-2-butyl-2-ethyl-pentan;
- Cycloaliphatische Diamine wie 1,3- und 1,4-Diaminocyclohexan, Bis-(4-aminocyclohexyl)-methan,Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 2- Methyl-1,3-diaminocyclohexan, 1,3- und 1,4-Bis-(aminomethyl)cyclohexan, 2,5(2,6)-Bis-(aminomethyl)-bicyclo[2.2.1]heptan (NBDA), 3(4),8(9)-Bis-(aminomethyl)-tricyclo[5.2.1.0^{2,6}]decan, 3,9-Bis-(3-aminopropyl)-2,4,8,10-tetraoxaspiro[5.5]-undecan, 1,3- und 1,4-Xylylendiamin, 1-Amino-3-aminomethyl-3,5,5-trimethylcyclohexan (= Isophorondiamin oder IPDA) und 1,4-Diamino-2,2,6-trimethylcyclohexan (TMCDA);
- Ethergruppen-haltige aliphatische Diamine wie Bis-(2-aminoethyl)-ether, 3,6-Dioxaoctan-1,8-diamin, 4,7-Dioxadecan-1,10-diamin, 4,7-Dioxa-decan-2,9-diamin, 4,9-Dioxadodecan-1,12-diamin, 5,8-Dioxadodecan-3,10-diamin und höhere Oligomere dieser Diamine;
- Polyoxyalkylen-Diamine, welche typischerweise Produkte aus der Aminierung von Polyoxyalkylen-Diolen darstellen und beispielsweise erhältlich sind unter dem Handelsnamen Jeffamine^{®} (von Huntsman Chemicals), unter dem Namen Polyetheramin (von BASF) oder unter dem Namen PC Amine^{®} (von Nitroil), wie zum Beispiel Jeffamine^{®} D-230, Jeffamine^{®} D-400, Jeffamine^{®} D-2000, Jeffamine^{®} D-4000, Jeffamine^{®} XTJ-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-523, Jeffamine^{®} XTJ-536, Jeffamine^{®} XTJ-542, Jeffamine^{®} XTJ-559; Polyetheramin D 230, Polyetheramin D 400 und Polyetheramin D 2000, PC Amine^{®} DA 250, PC Amine^{®} DA 400, PC Amine^{®} DA 650 und PC Amine^{®} DA 2000;
- Aliphatische Triamine wie 4-Aminomethyl-1,8-octandiamin, 1,3,5-Tris(aminomethyl)-benzol, 1,3,5-Tris-(aminomethyl)-cyclohexan;
- Polyoxyalkylen-Triamine, welche typischerweise Produkte aus der Aminierung von Polyoxyalkylen-Triolen darstellen und beispielsweise erhältlich sind unter dem Handelsnamen Jeffamine^{®} (von Huntsman Chemicals), unter dem Namen Polyetheramin (von BASF) oder unter dem Namen PC Amine^{®} (von Nitroil), wie zum Beispiel Jeffamine^{®} T-403, Jeffamine^{®} T-5000; Polyetheramin T403, Polyetheramin T5000; und PC Amine^{®} TA 403, PC Amine^{®} TA 5000;
- höherfunktionelle primäre Polyamine wie Polyvinylamine oder primäre Aminogruppen tragende Copolymerisate, beispielsweise aus Allylamin und (Meth)acrylaten;
- sowie Mischungen der vorgenannten Polyamine.

Als Polyamine der Formel (IV-A) bevorzugt sind 1,6-Hexamethylendiamin, 1,5-Diamino-2-methylpentan (MPMD), 1,3-Diaminopentan (DAMP), 1-Amino-3-aminomethyl-3,5,5-trimethylcyclohexan (= Isophorondiamin oder IPDA), 2,2,4- und 2,4,4-Trimethylhexamethylendiamin, 4-Aminomethyl-1,8-octandiamin, 1,3- und 1,4-Xylylendiamin, 1,3- und 1,4-Bis-(aminomethyl)-cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]decan, 1,2-, 1,3- und 1,4-Diaminocyclohexan, 3,6-Dioxaoctan-1,8-diamin, 4,7-Dioxadecan-1,10-diamin, Polyoxyalkylen-Diamine und -Triamine, sowie Mischungen von zwei oder mehr der vorgenannten Polyamine.

Als Polyoxyalkylen-Diamine und -Triamine sind insbesondere die unter dem Handelsnamen Jeffamine^{®} erhältlichen Typen D-230, D-400, D-2000, T-403 und T-5000 von Huntsman und dazu analoge Verbindungen von BASF oder Nitroil bevorzugt.

In einer weiteren Ausführungsform ist das Aldimin A ein Aldimin der Formel (I-B), 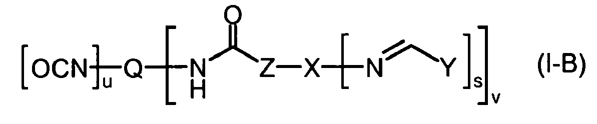 wobei
Q für den Rest eines (u+v) endständige Isocyanatgruppen aufweisenden Polyisocyanats nach Entfernung aller Isocyanatgruppen steht;
u für 0 oder 1 oder 2 steht;
v für 1 oder 2 oder 3 steht;
s für 1 oder 2, bevorzugt 1, steht;
Y für den Rest der Formel (I a) oder (I b) steht, 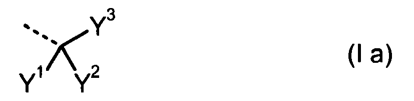 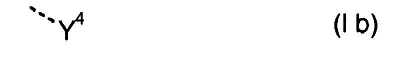 wobei
Y¹ und Y² entweder
unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen ist, stehen;
Y³ für einen einwertigen Kohlenwasserstoffrest, welcher gegebenenfalls mindestens ein Heteroatom, insbesondere Sauerstoff in Form von Ether-, Carbonyl- oder Ester-Gruppen, aufweist, steht; und
Y⁴ entweder
für eine substituierte oder unsubstituierte Aryl- oder Heteroaryl-Gruppe, welche eine Ringgrösse von 5 bis 8, bevorzugt 6, Atomen aufweist, steht, oder für 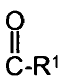 steht, wobei R¹ für ein Wasserstoffatom oder für eine Alkoxygruppe steht,
oder für eine substituierte oder unsubstituierte Alkenyl- oder Arylalkenylgruppe mit 1 - 30 C-Atomen steht;
X entweder
für einen (s+1)-wertigen, gegebenenfalls Heteroatome aufweisenden, Kohlenwasserstoffrest mit bevorzugt 2 bis 20 C-Atomen steht,
oder, falls Z für N-R⁷ steht, zusammen mit R⁷ für einen (s+2)-wertigen Kohlenwasserstoffrest mit bevorzugt 3 bis 20 C-Atomen, welcher gegebenenfalls mindestens ein Heteroatom, insbesondere in Form von Ether-Sauerstoff oder tertiärem Amin-Stickstoff, enthält, steht;
und
Z für O, S, NH, NR² oder NR⁷ steht,
wobei R²
entweder
für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureestergruppe aufweist, steht,
oder
für einen Substituenten der Formel (X) steht, 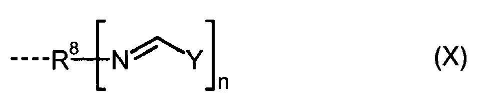 wobei
n für 1 oder 2 steht,
R⁸ für einen (n+1)-wertigen Kohlenwasserstoffrest, welcher gegebenenfalls Heteroatome, insbesondere in Form von Ether-Sauerstoff oder tertiärem Amin-Stickstoff, und gegebenenfalls aktiven Wasserstoff in Form von Hydroxylgruppen, sekundären Aminogruppen oder Mercaptogruppen enthält, steht; und
R⁷ zusammen mit X für einen (s+2)-wertigen Kohlenwasserstoffrest mit bevorzugt 3 bis 20 C-Atomen, welcher gegebenenfalls mindestens ein Heteroatom, insbesondere in Form von Ether-Sauerstoff oder tertiärem Amin-Stickstoff, enthält, steht.

Es gilt hierbei die Massgabe, dass u+(v*s) für einen Wert von 2 ≥ steht.

Für den Fall, dass Z für O, S, NR² oder NR⁷ steht, weisen die sich vom Rest X ableitenden Amine die Formel (IV-B) oder (IV-B') auf.

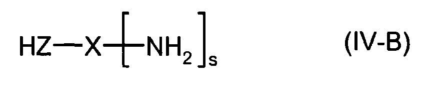

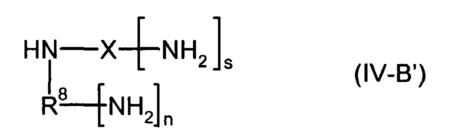

Geeignete Amine der Formel (IV-B) oder (IV-B') sind beispielsweise die folgenden:
- aliphatische Hydroxyamine wie 2-Aminoethanol, 2-Methylaminoethanol, 1-Amino-2-propanol, 3-Amino-1-propanol, 4-Amino-1-butanol, 4-Amino-2-butanol, 2-Amino-2-methylpropanol, 5-Amino-1-pentanol, 6-Amino-1-hexanol, 7-Amino-1-heptanol, 8-Amino-1-octanol, 10-Amino-1-decanol, 12-Amino-1-dodecanol, 4-(2-Aminoethyl)-2-hydroxyethylbenzol, 3-Aminomethyl-3,5,5-trimethyl-cyclohexanol; eine primäre Aminogruppe tragende Derivate von Glykolen wie Diethylenglykol, Dipropylenglykol, Dibutylenglykol und höheren Oligomeren und Polymeren dieser Glykole, beispielsweise 2-(2-Aminoethoxy)-ethanol, Triethylenglykol-monoamin, α-(2-Hydroxymethylethyl)-ω-(2-aminomethyl-ethoxy)-poly(oxy(methyl-1,2-ethandiyl)); eine Hydroxylgruppe und eine oder mehrere primäre Aminogruppen tragende Derivate von polyalkoxylierten drei- oder höherwertigen Alkoholen oder von polyalkoxylierten Diaminen; Produkte aus der einfachen Cyanoethylierung und anschliessender Hydrierung von Glykolen, beispielsweise 3-(2-Hydroxyethoxy)-propylamin, 3-(2-(2-Hydroxy-ethoxy)-ethoxy)-propylamin, 3-(6-Hydroxyhexyloxy)-propylamin;
- aliphatische Mercaptoamine wie 2-Aminoethanthiol (Cysteamin), 3-Aminopropanthiol, 4-Amino-1-butanthiol, 6-Amino-1-hexanthiol, 8-Amino-1-octanthiol, 10-Amino-1-decanthiol, 12-Amino-1-dodecanthiol; Aminothiozucker wie 2-Amino-2-deoxy-6-thioglucose;
- zwei- oder mehrwertige aliphatische Amine, welche neben einer oder mehreren primären Aminogruppen eine sekundäre Aminogruppe tragen, wie N-Methyl-1,2-ethandiamin, N-Ethyl-1,2-ethandiamin, N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethyl-piperidin, 3-(4-Aminobutyl)-piperidin, N-Aminoethyl-piperazin, Diethylentriamin (DETA), Bis-hexamethylentriamin (BHMT); Di- und Triamine aus der Cyanoethylierung oder Cyanobutylierung von primären Mono- und Diaminen, beispielsweise N-Methyl-1,3-propandiamin, N-Ethyl-1,3-propandiamin, N-Butyl-1,3-propandiamin, N-Hexyl-1,3-propandiamin, N-(2-Ethylhexyl)-1,3-propandiamin, N-Dodecyl-1,3-propandiamin, N-Cyclohexyl-1,3-propandiamin,3-Methylamino-1-pentylamin,3-Ethylamino-1-pentylamin,3-Butyl-amino-1-pentylamin, 3-Hexylamino-1-pentylamin, 3-(2-Ethylhexyl)amino-1-pentylamin,3-Dodecylamino-1-pentylamin,3-Cyclohexylamino-1-pentylamin, Dipropylentriamin (DPTA), N3-(3-Aminopentyl)-1,3-pentandiamin, N5-(3-Amino-propyl)-2-methyl-1,5-pentandiamin, N5-(3-Amino-1-ethylpropyl)-2-methyl-1,5-pentandiamin,und Fettdiamine wie N-Cocoalkyl-1,3-propandiamin, N-Oleyl-1,3-propandiamin, N-Soyaalkyl-1,3-propandiamin, N-Talgalkyl-1,3-propandiamin oder N-(C₁₆₋₂₂-Alkyl)-1,3-propandiamin, wie sie beispielsweise unter dem Handelsnamen Duomeen^{®} von Akzo Nobel erhältlich sind; die Produkte aus der Michael-artigen Addition von aliphatischen primären Di- oder Polyaminen mit Acrylnitril, Malein- oder Fumarsäurediestern, Citraconsäurediestern, Acryl- und Methacrylsäureestern und Itaconsäurediestern, umgesetzt im Molverhältnis 1:1.

Insbesondere geeignete aliphatische Hydroxy- und Mercaptoamine sind solche, in denen die primäre Aminogruppe von der Hydroxylgruppe, beziehungsweise der Mercaptogruppe, durch eine Kette von mindestens 5 Atomen oder durch einen Ring getrennt sind, wie beispielsweise in 5-Amino-1-pentanol, 6-Amino-1-hexanol, 7-Amino-1-heptanol, 8-Amino-1-octanol, 10-Amino-1-decanol, 12-Amino-1-dodecanol, 4-(2-Aminoethyl)-2-hydroxyethyl-benzol, 3-Aminomethyl-3,5,5-trimethyl-cyclohexanol, 2-(2-Aminoethoxy)-ethanol, Triethylenglykol-monoamin, α-(2-Hydroxymethylethyl)-ω-(2-aminome-thylethoxy)-poly(oxy(methyl-1,2-ethandiyl)), 3-(2-Hydroxyethoxy)-propylamin, 3-(2-(2-Hydroxyethoxy)-ethoxy)-propylamin, 3-(6-Hydroxyhexyloxy)-propylamin, 6-Amino-1-hexanthiol, 8-Amino-1-octanthiol, 10-Amino-1-decanthiol und 12-Amino-1-dodecanthiol.

Bevorzugte Amine der Formel (IV-B) oder (IV-B') sind ausgewählt aus der Gruppe bestehend aus N-Methyl-1,2-ethandiamin, N-Ethyl-1,2-ethan-diamin, N-Cyclohexyl-1,2-ethandiamin, N-Methyl-1,3-propandiamin, N-Ethyl-1,3-propandiamin, N-Butyl-1,3-propandiamin, N-Cyclohexyl-1,3-propandiamin, 4-Aminomethyl-piperidin, 3-(4-Aminobutyl)-piperidin, Diethylentriamin (DETA), Bis-hexamethylentriamin (BHMT), Dipropylentriamin (DPTA), Fettdiaminen, wie N-Cocoalkyl-1,3-propandiamin, N-Oleyl-1,3-propandiamin, N-Soyaalkyl-1,3-propandiamin und N-Talgalkyl-1,3-propandiamin; 5-Amino-1-pentanol, 6-Amino-1-hexanol, 4-(2-Aminoethyl)-2-hydroxyethylbenzol, 3-Aminomethyl-3,5,5-trimethyl-cyclohexanol, 2-(2-Aminoethoxy)-ethanol, Triethylenglykol-monoamin, 3-(2-Hydroxyethoxy)-propylamin, 3-(2-(2-Hydroxyethoxy)-ethoxy)-propylamin und 3-(6-Hydroxyhexyloxy)-propylamin.

Für den Fall, dass Z für NH steht, weisen die sich vom Rest X ableitenden Amine die Formel (IV-B1) auf.

H₂N-X-NH₂ (IV-B1)

Geeignete Amine der Formel (IV-B1) sind die als Polyamine der Formel (IV-A) beispielhaft genannten Diamine.

Insbesondere geeignete Amine der Formel (IV-B1) sind asymmetrische aliphatische oder cycloaliphatische primäre Diamine, insbesondere 1,2-Propandiamin, 2-Methyl-1,2-propandiamin, 1,3-Butandiamin, 1,3-Diaminopentan (DAMP), 2,2,4-Trimethylhexamethylendiamin (TMD), 1,5-Diamino-2-butyl-2-ethyl-pentan, 1-Amino-3-aminomethyl-3,5,5-trimethylcyclohexan (= Isophorondiamin oder IPDA) und 1,4-Diamino-2,2,6-trimethylcyclohexan (TMCDA).

Bevorzugte Amine der Formel (IV-B1) sind 1,3-Diaminopentan (DAMP), 1,5-Diamino-2-butyl-2-ethyl-pentan, 2,2,4-Trimethylhexamethylendiamin (TMD) und 1-Amino-3-aminomethyl-3,5,5-trimethylcyclohexan (= Isophorondiamin oder IPDA).
Polyisocyanate, welche sich vom Rest Q ableiten, weisen die Formel (V) auf.

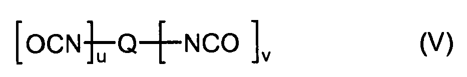

In einer bevorzugten Ausführungsform ist das Polyisocyanat der Formel (V) ein Isocyanatgruppen aufweisendes Polyurethanpolymer **PUP.** Ein geeignetes Isocyanatgruppen aufweisendes Polyurethanpolymer **PUP** ist erhältlich durch die Umsetzung von mindestens einem Polyol mit mindestens einem Polyisocyanat. Hierfür sind die bereits vorgängig für das Polyurethanpolymer **P** beschriebenen Polyole und Polyisocyanate geeignet. Das Polyurethanpolymer **PUP** kann fest oder flüssig sein. Als Polyurethanpolymer **PUP** besonders geeignet ist ein bei Raumtemperatur festes Polyurethanpolymer **PUP1.** Insbesondere ist das Polyurethanpolymer **PUP1** gleich wie das bei Raumtemperatur feste Polyurethanpolymer **P.**

In einer weiteren bevorzugten Ausführungsform ist das Polyisocyanat der Formel (V) ein Polyisocyanat **PI** in der Form eines Diisocyanates oder eines niedrigmolekularen Oligomeren eines Diisocyanates oder eines Derivates eines Diisocyanates, wobei als Diisocyanat die gleichen Diisocyanate geeignet sind, welche bereits als geeignet zur Herstellung eines Polyurethanpolymers **P** genannt wurden.

Als Polyisocyanat **PI** eignen sich vor allem Oligomere oder Oligomerengemische von Diisocyanaten, insbesondere von HDI, IPDI, TDI und MDI. Kommerziell erhältliche Typen sind insbesondere HDI-Biurete, beispielsweise als Desmodur^{®} N 100 und N 3200 (Bayer), Tolonate^{®} HDB und HDB-LV (Rhodia) und Duranate^{®} 24A-100 (Asahi Kasei); HDI-Isocyanurate, beispielsweise als Desmodur^{®} N 3300, N 3600 und N 3790 BA (alle von Bayer), Tolonate^{®} HDT, HDT-LV und HDT-LV2 (Rhodia), Duranate^{®} TPA-100 und THA-100 (Asahi Kasei) und Coronate^{®} HX (Nippon Polyurethane); HDI-Uretdione, beispielsweise als Desmodur^{®} N 3400 (Bayer); HDI-Iminooxadiazindione, beispielsweise als Desmodur^{®} XP 2410 (Bayer); HDI-Allophanate, beispielsweise als Desmodur^{®} VP LS 2102 (Bayer); IPDI-Isocyanurate, beispielsweise in Lösung als Desmodur^{®} Z 4470 (Bayer) oder in fester Form als Vestanat^{®} T1890/100 (Degussa); TDI-Oligomere, beispielsweise als Desmodur^{®} IL (Bayer); gemischte Isocyanurate auf Basis TDI / HDI, zum Beispiel als Desmodur^{®} HL (Bayer).

Als Polyisocyanat **PI** bevorzugt sind die Oligomere von HDI und/oder IPDI, insbesondere die Isocyanurate.

Die vorgenannten Polyisocyanate **PI** stellen üblicherweise Gemische von Substanzen mit unterschiedlichen Oligomerisationsgraden und/oder chemischen Strukturen dar. Vorzugsweise weisen sie eine mittlere NCO-Funktionalität von 2.1 bis 4.0 auf und enthalten insbesondere Isocyanurat-, Iminooxadiazindion-, Uretdion-, Urethan-, Biuret-, Allophanat-, Carbodiimid , Uretonimin- oder Oxadiazintrion-Gruppen.

Die Aldimine **A** sind erhältlich durch eine Kondensationsreaktion zwischen einem Aldehyd und einem primären Amin unter Abspaltung von Wasser. Solche Kondensationsreaktionen sind bestens bekannt und beschrieben, beispielsweise in Houben-Weyl, "Methoden der organischen Chemie", Vol. XI/2, Seite 73ff.

Die Aldimine **A** der Formel (I-A) lassen sich direkt aus Polyaminen der Formel (IV-A) und Aldehyden der Formel (VI) herstellen.

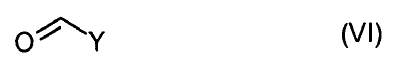

Der Aldehyd der Formel (VI) wird hierbei in Bezug auf die primären Aminogruppen des Amins stöchiometrisch oder in stöchiometrischem Überschuss eingesetzt. Üblicherweise werden solche Kondensationsreaktionen in Anwesenheit eines Lösemittels durchgeführt, mittels welchem das bei der Reaktion entstehende Wasser azeotrop entfernt wird. Zur Herstellung der Aldimine wird jedoch ein Herstellverfahren ohne Verwendung von Lösemitteln bevorzugt, wobei das bei der Kondensation gebildete Wasser durch Anlegen von Vakuum aus der Reaktionsmischung entfernt wird. Durch die lösemittelfreie Herstellung erübrigt sich ein Abdestillieren des Lösemittels, was den Herstellungsprozess vereinfacht. Zudem ist das Aldimin so frei von Lösemittelrückständen.

Die Aldimine **A** der Formel (I-B) lassen sich in einem Zweischrittverfahren herstellen. In einer ersten Stufe wird ein Amin mit s primären Aminogruppen und einer ZH-Gruppe der Formel (IV-B) oder der Formel (IV-B') mit einem Aldehyd der Formel (VI) zum Aldimin der Formel (IX) umgesetzt, in der gleichen Weise wie vorgängig für das Aldimin der Formel (I-A) beschrieben.

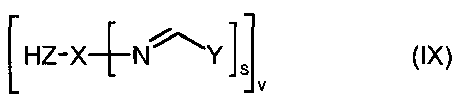

In einer zweiten Stufe wird das Aldimin der Formel (IX) mit dem Polyisocyanat der Formel (V) zum gewünschten Aldimin der Formel (I-B) umgesetzt. Je nach eingesetzter Stöchiometrie verbleiben Isocyanatgruppen im Aldimin der Formel (I-B), d.h. u > 0, oder es werden alle Isocyanatgruppen umgesetzt, d.h. u = 0.

Für die Herstellung der Aldimine **A** der Formel (1-A) und (1-B) werden Aldehyde **ALD** der Formel (VII b) oder (VII a) eingesetzt.

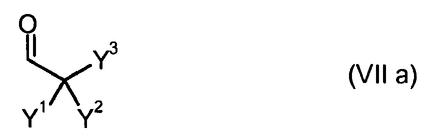

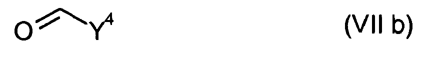

Diese Aldehyde **ALD** haben die Eigenschaft, dass ihre Reste Y¹, Y², Y³ und Y⁴ keine Gruppierungen aufweisen, die mit Isocyanatgruppen reaktionsfähig sind; insbesondere weisen Y¹, Y², Y³ und Y⁴ keine Hydroxylgruppen, keine primären oder sekundären Aminogruppen und keine Mercaptogruppen auf.

Aldehyde **ALD** der Formel (VII a) stellen tertiäre aliphatische oder tertiäre cycloaliphatische Aldehyde dar. Geeignete Aldehyde **ALD** der Formel (VII a) sind beispielsweise Pivalaldehyd (= 2,2-Dimethyl-propanal), 2,2-Dimethyl-butanal, 2,2-Diethyl-butanal, 1-Methyl-cyclopentancarboxaldehyd, 1-Methyl-cyclohexancarboxaldehyd; Ether aus 2-Hydroxy-2-methylpropanal und Alkoholen wie Propanol, Isopropanol, Butanol und 2-Ethylhexanol; Ester aus 2-Formyl-2-methylpropionsäure oder 3-Formyl-3-methylbuttersäure und Alkoholen wie Propanol, Isopropanol, Butanol und 2-Ethylhexanol; Ester aus 2-Hydroxy-2-methylpropanal und Carbonsäuren wie Buttersäure, Isobuttersäure und 2-Ethylhexansäure; sowie die im folgenden als besonders geeignet beschriebenen Ether und Ester von 2,2-disubstituierten 3-Hydroxypropanalen, 3-Hydroxybutanalen oder analogen höheren Aldehyden, insbesondere von 2,2-Dimethyl-3-hydroxypropanal.

Besonders geeignete Aldehyde **ALD** der Formel (VII a) sind einerseits Aldehyde **ALD1** der Formel (VIII a), das heisst, Aldehyde **ALD** der Formel (VII a) mit dem Rest Y³ der Formel (II). 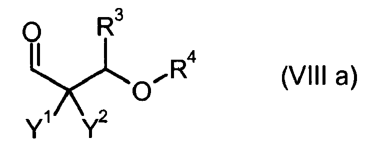 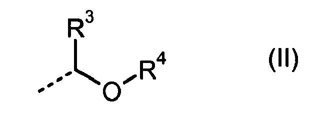 In den Formeln (VIII a) und (II) stehen
R³ für ein Wasserstoffatom oder für eine Alkyl- oder Arylalkylgruppe, bevorzugt für ein Wasserstoffatom; und
R⁴ für einen Kohlenwasserstoffrest mit 1 bis 30, insbesondere 11 bis 30, C-Atomen, der gegebenenfalls Heteroatome enthält.

Bevorzugt stehen Y¹ und Y² jeweils für eine Methylgruppe, und R³ steht bevorzugt für ein Wasserstoffatom.

Aldehyde **ALD1** der Formel (VIII a) stellen Ether von aliphatischen, cycloaliphatischen oder arylaliphatischen 2,2-disubstituierten 3-Hydroxyaldehyden mit Alkoholen oder Phenolen der Formel R⁴-OH, beispielsweise Fettalkoholen oder Phenol, dar. Geeignete 2,2-disubstituierte 3-Hydroxyaldehyde sind ihrerseits erhältlich aus Aldol-Reaktionen, insbesondere gekreuzten Aldol-Reaktionen, zwischen primären oder sekundären aliphatischen Aldehyden, insbesondere Formaldehyd, und sekundären aliphatischen, sekundären cycloaliphatischen oder sekundären arylaliphatischen Aldehyden, wie beispielsweise Isobutyraldehyd, 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd (Hydratropaldehyd) oder Diphenylacetaldehyd.

Als Beispiele solcher Aldehyde **ALD1** der Formel (VIII a) genannt sind 2,2-Dimethyl-3-phenoxy-propanal, 3-Cyclohexyloxy-2,2-dimethyl-propanal, 2,2-Dimethyl-3-(2-ethylhexyloxy)-propanal, 2,2-Dimethyl-3-lauroxy-propanal und 2,2-Dimethyl-3-stearoxy-propanal.

Besonders geeignete Aldehyde **ALD** der Formel (VIIa) sind andererseits Aldehyde **ALD2** der Formel (VIII b), das heisst, Aldehyde **ALD** der Formel (VII a) mit dem Rest Y³ der Formel (III). 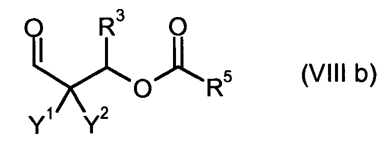 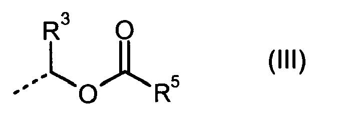 In den Formeln (VIII b) und (III) steht R⁵
entweder für ein Wasserstoffatom,
oder für einen linearen oder verzweigten Alkylrest mit 1 bis 30, insbesondere 11 bis 30, C-Atomen, gegebenenfalls mit cyclischen Anteilen und gegebenenfalls mit mindestens einem Heteroatom,
oder für einen einfach oder mehrfach ungesättigten, linearen oder verzweigten Kohlenwasserstoffrest mit 5 bis 30 C-Atomen,
oder für einen, gegebenenfalls substituierten, aromatischen oder heteroaromatischen 5- oder 6-gliedrigen Ring.

Bevorzugt stehen Y¹ und Y² jeweils für eine Methylgruppe, und R³ steht bevorzugt für ein Wasserstoffatom.

Aldehyde **ALD2** der Formel (VIII b) stellen Ester der bereits beschriebenen 2,2-disubstituierten 3-Hydroxyaldehyde, wie beispielsweise 2,2-Dimethyl-3-hydroxypropanal, 2-Hydroxymethyl-2-methyl-butanal, 2-Hydroxymethyl-2-ethyl-butanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxymethyl-2-methyl-3-phenyl-propanal, 3-Hydroxy-2-methyl-2-phenyl-propanal und 3-Hydroxy-2,2-diphenyl-propanal, mit geeigneten Carbonsäuren dar.

Beispiele für geeignete Carbonsäuren sind zum einen aliphatische Carbonsäuren, wie Ameisensäure, Essigsäure, Propionsäure, Buttersäure, Isobuttersäure, Valeriansäure, Capronsäure, 2-Ethyl-capronsäure, Caprinsäure, Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Linolsäure, Linolensäure, Elaeostearinsäure, Arachidonsäure, Fettsäuren aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl, sowie technische Gemische von Fettsäuren, welche solche Säuren enthalten. Als Carbonsäuren geeignet sind zum anderen aromatische Carbonsäuren, beispielsweise Benzoesäure oder die stellungsisomeren Tolylsäuren, Ethyl- oder Isopropyl- oder tert.-Butyl- oder Methoxy- oder Nitrobenzoesäuren.

Bevorzugte Aldehyde **ALD2** der Formel (VIII b) sind 3-Benzoyloxy-2,2-dimethylpropanal, 3-Cyclohexanoyloxy-2,2-dimethylpropanal, 2,2-Dimethyl-3-(2-ethylhexyloxy)-propanal, 2,2-Dimethyl-3-lauroyloxy-propanal, 2,2-Dimethyl-3-myristoyloxypropanal, 2,2-Dimethyl-3-palmitoyloxy-propanal, 2,2-Dimethyl-3-stearoyloxypropanal und, sowie analoge Ester anderer 2,2-disubstituierter 3-Hydroxyaldehyde.

In einer besonders bevorzugten Ausführungsform ist R⁵ ausgewählt aus der Gruppe bestehend aus Phenyl, Cyclohexyl und den C₁₁-, C₁₃-, C₁₅- und C₁₇-Alkylgruppen.

Als Aldehyd **ALD2** der Formel (VIII b) besonders bevorzugt ist 2,2-Dimethyl-3-lauroyloxypropanal.

In einer bevorzugten Herstellmethode des Aldehyds **ALD2** der Formel (VIII b) wird ein 2,2-disubstituierter 3-Hydroxyaldehyd, beispielsweise 2,2-Dimethyl-3-hydroxypropanal, welcher beispielsweise aus Formaldehyd (oder Paraformaldehyd) und Isobutyraldehyd, gegebenenfalls in situ, hergestellt werden kann, mit einer Carbonsäure zum entsprechenden Ester umgesetzt. Diese Veresterung kann ohne die Verwendung von Lösemitteln nach bekannten Methoden erfolgen, beschrieben beispielsweise in Houben-Weyl, "Methoden der organischen Chemie", Vol. VIII, Seiten 516 - 528.

Geeignete Aldehyde **ALD** der Formel (VII b) sind aromatische Aldehyde, beispielsweise Benzaldehyd, 2- und 3- und 4-Tolualdehyd, 4-Ethyl- und 4-Propyl- und 4-Isopropyl und 4-Butyl-benzaldehyd, 2,4-Dimethylbenzaldehyd, 2,4,5-Trimethylbenzaldehyd, 4-Acetoxybenzaldehyd, 4-Anisaldehyd, 4-Ethoxybenzaldehyd, die isomeren Di- und Trialkoxybenzaldehyde, 2-, 3- und 4-Nitrobenzaldehyd, 2- und 3- und 4-Formylpyridin, 2-Furfuraldehyd, 2-Thiophencarbaldehyd, 1- und 2-Naphthylaldehyd, 3- und 4-Phenyloxy-benzaldehyd; Chinolin-2-carbaldehyd und dessen 3-, 4-, 5-, 6-, 7- und 8-Stellungsisomere, sowie Anthracen-9-carbaldehyd.

Geeignete Aldehyde **ALD** der Formel (VII b) sind weiterhin Glyoxal, Glyoxalsäureester, beispielsweise Glyoxalsäuremethylester, Zimtaldehyd und substituierte Zimtaldehyde.

In einer besonders bevorzugten Ausführungsform ist der Aldehyd **ALD** der Formel (VII a) geruchsfrei. Unter einer "geruchsfreien" Substanz wird eine Substanz verstanden, die so geruchsarm ist, dass sie für die meisten menschlichen Individuen nicht riechbar, das heisst mit der Nase nicht wahrnehmbar, ist.

Geruchsfreie Aldehyde **ALD** der Formel (VII a) sind einerseits insbesondere Aldehyde **ALD1** der Formel (VIII a), in welchen der Rest R⁴ für einen Kohlenwasserstoffrest mit 11 bis 30 C-Atomen, der gegebenenfalls Heteroatome enthält, steht.

Andererseits sind geruchsfreie Aldehyde **ALD** der Formel (VII a) insbesondere Aldehyde **ALD2** der Formel (VIII b), in welchen der Rest R⁵ entweder für eine lineare oder verzweigte Alkylgruppe mit 11 bis 30 Kohlenstoff-Atomen, gegebenenfalls mit cyclischen Anteilen, und gegebenenfalls mit mindestens einem Heteroatom, insbesondere mit mindestens einem Ether-Sauerstoff, oder für eine einfach oder mehrfach ungesättigte lineare oder verzweigte Kohlenwasserstoffkette mit 11 bis 30 Kohlenstoff-Atomen steht.

Beispiele für geruchsfreie Aldehyde **ALD2** der Formel (VIII b) sind Veresterungsprodukte aus den bereits genannten 2,2-disubstituierten 3-Hydroxyaldehyden mit Carbonsäuren wie beispielsweise Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Linolsäure, Linolensäure, Elaeostearinsäure, Arachidonsäure, Fettsäuren aus der technischen Verseifung von natürlichen Ölen und Fetten, wie beispielsweise Rapsöl, Sonnenblumenöl, Leinöl, Ölbaumöl, Kokosnussöl, Ölpalmkernöl und Ölpalmöl, sowie technische Gemische von Fettsäuren, welche diese Säuren enthalten. Bevorzugte Aldehyde der Formel (VIII b) sind 2,2-Dimethyl-3-lauroyloxypropanal, 2,2-Dimethyl-3-myristoyloxypropanal, 2,2-Dimethyl-3-palmitoyloxypropanal und 2,2-Dimethyl-3-stearoyloxypropanal. Besonders bevorzugt ist 2,2-Dimethyl-3-lauroyloxypropanal.

Aldimine **A** der Formel (I-A) und (I-B), welche ausgehend von geruchsfreien Aldehyden der vorgängig beschriebenen besonders bevorzugten Ausführungsformen hergestellt sind, sind geruchsfrei. Solche geruchsfreie Aldimine **A** sind besonders bevorzugt.

Der Heissschmelzklebstoff **K** kann weitere Bestandteile enthalten. Als ein besonders bevorzugter weiterer Bestandteil gilt eine Säure in Form einer organischen Monocarbonsäure oder Dicarbonsäure oder einer organischen Monosulfonsäure oder Disulfonsäure oder einer zu einer dieser Säuren hydrolysierbaren Verbindung.

In einer Ausführungsform stellt diese Säure eine organische Mono- oder Dicarbonsäure oder eine zu einer organischen Mono- oder Dicarbonsäure hydrolysierbare Verbindung dar, beispielsweise ausgewählt aus
- gesättigten aliphatischen Monocarbonsäuren wie Ameisensäure, Essigsäure, Propionsäure, Buttersäure, Isobuttersäure, Valeriansäure, Isovaleriansäure, Pivalinsäure, Capronsäure, Oenanthsäure, Caprylsäure, 2-Ethylhexansäure, Pelargonsäure, Caprinsäure, Neodecansäure, Undecansäure, Laurinsäure, Tridecansäure, Myristinsäure, Pentadecansäure, Palmitinsäure, Margarinsäure, Stearinsäure, Isostearinsäure, Arachinsäure und Behensäure;
- gesättigten aliphatischen Dicarbonsäuren wie Oxalsäure, Malonsäure, Bernsteinsäure, Glutarsäure, Adipinsäure, Pimelinsäure, Korksäure, Azelainsäure, Sebacinsäure und Dodecandisäure;
- einfach oder mehrfach ungesättigten aliphatischen Mono- oder Dicarbonsäuren wie Palmitoleinsäure, Ölsäure, Erucasäure, Sorbinsäure, Linolsäure, Linolensäure, Elaeostearinsäure, Ricinolsäure, Ricinensäure, Maleinsäure, Fumarsäure und Sorbinsäure;
- cycloaliphatischen Mono- oder Dicarbonsäuren wie Cyclohexancarbonsäure, Hexahydrophthalsäure, Tetrahydrophthalsäure, Harzsäuren und Naphthensäuren;
- halogenierten aliphatischen Mono- oder Dicarbonsäuren wie Trichloressigsäure und 2-Chlorpropionsäure;
- aromatischen Mono- oder Dicarbonsäuren wie Benzoesäure, Salicylsäure, Gallussäure, Phthalsäure, Terephthalsäure, Isophthalsäure und die stellungsisomeren Tolylsäuren, Methoxybenzoesäuren, Chlorbenzoesäuren und Nitrobenzoesäuren;
- technischen Carbonsäure-Gemischen wie zum Beispiel Versatic^{®}-Säuren;
- Carbonsäureanhydriden wie Phthalsäureanhydrid und Hexahydrophthalsäureanhydrid;
- Silylester der genannten organischen Carbonsäuren, beispielsweise Siliciumtetraacetat, Trimethylsilylacetat, Triacetoxyethylacetat, Laurinsäuretrimethylsilylester und Benzoesäuretrimethylsilylester.

In einer weiteren Ausführungsform stellt diese Säure eine organische Mono- oder Disulfonsäure oder eine zu einer organischen Mono- oder Disulfonsäure hydrolysierbare Verbindung dar, beispielsweise ausgewählt aus
- aliphatischen oder aromatischen Mono- und Disulfonsäuren wie Methylsulfonsäure, Vinylsulfonsäure, Butylsulfonsäure, Sulfoessigsäure, Benzolsulfonsäure, die stellungsisomeren Benzoldisulfonsäuren, p-Toluolsulfonsäure, p-Xylolsulfonsäure, 4-Dodecylbenzolsulfonsäure, 1-Naphtalinsulfonsäure, Dinonylnaphthalinsulfonsäure und Dinonylnaphthalindisulfonsäure;
- Alkyl- oder Silylestern der genannten Mono- oder Disulfonsäuren, beispielsweise p-Toluolsulfonsäuremethylester, Ethylenglykol-bis-p-toluolsulfonat, Trimethylsilyl-methansulfonat und Benzolsulfonsäuretrimethylsilylester;
- Sultonen und Anhydriden, beispielsweise 1,4-Butansulton und 2-Sulfobenzoesäureanhydrid.

Bei dieser Säure kann es sich auch um Mischungen aus zwei oder mehr der genannten Säuren oder zu diesen Säuren hydrolysierbaren Verbindungen handeln.

Als derartige Säure bevorzugt sind aromatische Monocarbonsäuren, insbesondere Benzoesäure, Salicylsäure und 2-Nitrobenzoesäure.

Üblicherweise ist diese Säure in Form einer organischen Monocarbonsäure oder Dicarbonsäure oder einer organischen Monosulfonsäure oder Disulfonsäure oder einer zu einer dieser Säuren hydrolysierbaren Verbindung in einer Menge von 0.001 bis 5 Gewichts-%, bevorzugt 0.005 bis 2 Gewichts-%, bezogen auf den Heissschmelzklebstoff **K,** vorhanden.

Diese Säure hat eine katalytische Wirkung auf die Hydrolyse des Aldimins **A,** was die Vernetzung des Heissschmelzklebstoffs **K** beschleunigt.

Der Heissschmelzklebstoff **K** enthält gegebenenfalls weitere Bestandteile, wie sie nach dem Stand der Technik üblicherweise eingesetzt werden. Dem Fachmann ist dabei klar, dass solche weiteren Bestandteile in Abhängigkeit der jeweiligen Zusammensetzung und in ihrer Art und Menge so zu wählen sind, dass trotz ihrer Anwesenheit die Lagerstabilität der Zusammensetzung gegeben ist.

Gegebenenfalls enthält der Heissschmelzklebstoff **K** nicht-reaktive thermoplastische Polymere, wie beispielsweise Homo- oder Copolymere von ungesättigten Monomeren, insbesondere aus der Gruppe umfassend Ethylen, Propylen, Butylen, Isobutylen, Isopren, Vinylacetat oder höhere Ester davon, und (Meth)acrylat. Besonders geeignet sind Ethylenvinylacetat-Copolymere (EVA), ataktische Poly-α-Olefine (APAO), Polypropylene (PP) und Polyethylene (PE).

Gegebenenfalls enthält der Heissschmelzklebstoff **K** Katalysatoren für die Reaktion der Isocyanatgruppen, wie Metallverbindungen oder tertiäre Amine.

Geeignete Metallverbindungen sind beispielsweise Zinnverbindungen wie Dibutylzinndiacetat, Dibutylzinndilaurat, Dibutylzinndistearat, Dibutylzinndiacetylacetonat, Dioctylzinndilaurat, Dibutylzinndichlorid, Dibutylzinnoxid, Zinn(II)-carboxylate; Stannoxane wie Laurylstannoxan; Bismutverbindungen wie Bismut(III)-octoat, Bismut(III)-neodecanoat oder Bismut(III)-oxinate.

Geeignete tertiäre Amine sind beispielsweise 2,2'-Dimorpholinodiethylether und andere Morpholinether-Derivate, 1,4-Diazabicyclo[2.2.2]octan und 1,8-Diazabicyclo[5.4.0]undec-7-en.

Ebenso kann der Heissschmelzklebstoff **K** Mischungen der genannten Katalysatoren enthalten. Besonders geeignet sind Mischungen von Metallverbindungen und tertiären Aminen.

Gegebenenfalls enthält der Heissschmelzklebstoff **K** Reaktivverdünner oder Vernetzer, beispielsweise Oligomere oder Polymere von Diisocyanaten wie MDI, PMDI, TDI, HDI, 1,12-Dodecamethylendiisocyanat, Cyclohexan-1,3- oder 1,4-diisocyanat, IPDI, Perhydro-2,4'- und -4,4'-diphenylmethandiisocyanat, 1,3- und 1,4-Tetramethylxylylendiisocyanat, insbesondere Isocyanurate, Carbodiimide, Uretonimine, Biurete, Allophanate und Iminooxadiazindione der genannten Diisocyanate, Addukte von Polyisocyanaten mit kurzkettigen Polyolen, sowie Adipinsäure-dihydrazid und andere Dihydrazide, sowie weitere blockierte Amine wie Oxazolidine, Enamine oder Ketimine.

Weiterhin kann der Heissschmelzklebstoff **K** andere Zusätze enthalten, wie insbesondere Füllstoffe, Weichmacher, Haftvermittler, insbesondere Silangruppen enthaltende Verbindungen, UV-Absorptionsmittel, UV- oder Wärmestabilisatoren, Antioxidantien, Flammschutzmittel, optische Aufheller, Pigmente, Farbstoffe und Trocknungsmittel, sowie weitere üblicherweise in isocyanathaltigen Zusammensetzungen eingesetzte Substanzen.

In einer bevorzugten Ausführungsform ist der Heissschmelzklebstoff **K** frei von Russ.

In einer weiteren bevorzugten Ausführungsform ist der Heissschmelzklebstoff **K** ganz frei von Füllstoffen.

Besonders bevorzugt ist der Heissschmelzklebstoff **K** frei, bzw. zumindest im Wesentlichen frei, von Weichmachern und Lösemitteln.

In einer besonders bevorzugten Ausführungsform ist der vorgängig beschriebene Heissschmelzklebstoff **K** transparent. Insbesondere ist er sowohl vor als auch nach dem Vernetzen mit Feuchtigkeit transparent. Ein solcher Heissschmelzklebstoff **K** ist besonders geeignet für die Verklebung von Substraten, bei der zumindest eines der zu verklebenden Substrate durchsichtig oder durchscheinend ist.

Der vorgängig beschriebene Heissschmelzklebstoff **K** wird unter Ausschluss von Feuchtigkeit hergestellt und aufbewahrt. In einer geeigneten, klimadichten Verpackung oder Anordnung, wie beispielsweise in einem Fass, einem Beutel oder einer Kartusche, verfügt er über eine hervorragende Lagerstabilität. Mit den Begriffen "lagerstabil" und "Lagerstabilität" in Zusammenhang mit einer Zusammensetzung oder einem Klebstoff wird im vorliegenden Dokument der Sachverhalt bezeichnet, dass die Viskosität der Zusammensetzung oder des der Klebstoffs bei der Applikationstemperatur bei geeigneter Lagerung in der betrachteten Zeitspanne nicht oder höchstens so stark ansteigt, dass die Zusammensetzung oder der Klebstoff auf die vorgesehene Weise verwendbar bleibt.

Für die Wirkungsweise eines reaktiven Heissschmelzklebstoffes ist es wichtig, dass der Klebstoff **K** aufschmelzbar ist, das heisst, dass er bei der Applikationstemperatur eine genügend niedrige Viskosität aufweist, um applizierbar zu sein, und dass er beim Erkalten möglichst schnell eine genügende Klebefestigkeit aufbaut, schon bevor die Vernetzungsreaktion mit Wasser, insbesondere in der Form von Luftfeuchtigkeit, abgeschlossen ist (Anfangsfestigkeit). Es hat sich gezeigt, dass der beschriebene Heissschmelzklebstoff **K** bei der Applikationstemperatur, welche für Heissschmelzklebstoffe im Bereich von 80 °C bis 200 °C, typischerweise von 120 °C bis 160 °C, liegt, eine gut handhabbare Viskosität aufweist und dass er beim Erkalten genügend schnell eine gute Klebefestigkeit aufbaut. Als gut handhabbare Viskosität wird insbesondere eine Viskosität von 1 - 50 Pa.s verstanden.

Der Schichtverbundkörper kann beispielsweise durch ein Verfahren, wie es im Folgenden beschrieben wird, erhalten werden:

In einem weiteren Aspekt betrifft die vorliegende Erfindung ein Verfahren zum Verkleben von einem Weichmacher enthaltenden Kunststoff umfassend die Schritte:
i) Schmelzen eines Heissschmelzklebstoffes **K,** wie er vorgängig bereits beschrieben wurde
ii) Applizieren des geschmolzenen Heissschmelzklebstoffes **K** auf ein Substrat **S1**
iii) Kontaktieren der Oberfläche eines Substrates **S2** mit dem Heissschmelzklebstoff **K** innerhalb dessen Offenzeit;
oder
i') Schmelzen eines Heissschmelzklebstoffes **K**, wie er vorgängig bereits beschrieben wurde
ii') Applizieren des geschmolzenen Heissschmelzklebstoffes **K** auf ein Substrat **S1**
iii') Abkühlen des Heissschmelzklebstoffes **K** auf Raumtemperatur
iv') Anschmelzen des auf dem Substrat **S1** befindlichen Heissschmelzklebstoffes **K**
v') Kontaktieren der Oberfläche eines Substrates **S2** mit dem Heissschmelzklebstoff **K;**
oder
i") Schmelzen eines Heissschmelzklebstoffes **K,** wie er vorgängig bereits beschrieben wurde
ii") Applizieren des geschmolzenen Heissschmelzklebstoffes **K** in einen Spalt, welcher seitlich im Wesentlichen durch die Oberflächen des Substrates **S1** und des Substrates **S2** begrenzt ist.

Hierbei ist wesentlich, dass mindestens eines der Substrate **S1** und/oder **S2** ein Weichmacher enthaltender Kunststoff ist und das Substrat **S1** aus dem gleichen oder einem unterschiedlichen Material wie das Substrat **S2** besteht. Die Substrate **S1** und **S2** wurden bereits vorgängig in der Beschreibung des Schichtverbundkörpers beschrieben.

Typischerweise nach Schritt iii) oder v') oder ii") schliesst sich ein Schritt des Vernetzens durch Reaktion der Isocyanatgruppen des Heissschmelzklebstoffes **K** unter dem Einfluss von Wasser, insbesondere in der Form von Luftfeuchtigkeit, an.

Die Applikation des geschmolzenen Heissschmelzklebstoffes **K** kann auf verschiedenste Art und Weise, beispielsweise durch ein Sprüh-, Streich-, Rakel-, Stempel-, Walz- oder Giessauftragsverfahren, erfolgen.

Der geschmolzene Heissschmelzklebstoff **K** wird in den ersten zwei Varianten dieses Verfahrens auf ein Substrat **S1** appliziert. Das Substrat **S1** ist hierbei insbesondere eine Folie aus einem Weichmacher enthaltenden Kunststoff, insbesondere eine Weich-PVC-Folie. Somit entsteht eine beschichtete Kunststofffolie, welche ebenfalls ein Aspekt der vorliegenden Erfindung darstellt.

In einer Ausführungsform kann diese Folie nach dem Erkalten auf Raumtemperatur als beschichtete Folie als Zwischenprodukt verwendet werden. Das Abkühlen kann beschleunigt werden, indem durch ein Abkühlmittel, beispielsweise durch ein Gebläse, insbesondere ein Luftgebläse, gekühlt wird. Die derart hergestellte beschichtete Kunststofffolie kann nun je nach Bedarf abgelängt, abgeschnitten, aufgerollt oder direkt weiter verarbeitet werden. Die Rollen mit den beschichteten Kunststofffolien können nun je nach Bedarf gelagert oder transportiert werden. Beim Aufrollen können hierbei Trennpapier-Zwischenlagen verwendet werden, um zu verhindern, dass - durch das Rollen bedingt - aufeinander liegende Teile der Folie in direktem Kontakt miteinander sind. Es zeigte sich jedoch, dass in vielen Fällen auf die Verwendung von derartigen Trennpapier-Zwischenlagen verzichtet werden kann, und ein sogenanntes Blocken der aufgerollten Folie auch nach längeren Lager- oder Transportzeiten nicht auftritt. Für eine länger andauernde Lagerung ist es jedoch von grösstem Vorteil, wenn diese beschichtete Folie vor dem Einfluss von Wasser geschützt wird. Dies kann zum Beispiel durch eine feuchtigkeitsdichte Verpackung, wie beispielsweise durch eine verschweisste Kunststofffolie oder Aluminiumbeutel erfolgen, wobei vorteilhaft der Innenraum vor dem Verschliessen evakuiert oder mit Schutzgas gefüllt wird. So kann beispielsweise die beschichtete Kunststofffolie beim Folienhersteller beschichtet werden, welche darauf hin gelagert und zum Ort oder demjenigen Werk geliefert werden kann, wo dann diese vorbeschichtete Folie mit einem Träger verklebt wird. Trotz dieser unter Umständen langen Zeitspanne zwischen Beschichtung und Verarbeitung kann ein tadelloser Klebverbund gewährleistet werden. Dies kann insbesondere deshalb von grossem Vorteil sein, weil in der Industrie, insbesondere in der Fahrzeugherstellung, ein Trend der Fertigung "weg vom Band hin zum Zulieferer" zu beobachten ist. Dieser Trend setzt sich seinerseits auch zwischen dem direkten Zulieferer - zum Beispiel von Autotüren - und dessen Zulieferer - zum Beispiel von Dekormateralien - fort. Es ist dem Fachmann klar, dass unter gewissen Bedingungen es trotzdem von Vorteil sein kann, Zwischenlagen eines Trennpapiers zu verwenden.

Kurzfristig, d.h. bis zu wenigen Stunden, kann eine beschichtete Kunststofffolie vielfach auch ohne eine derartige Verpackung gelagert und weiter verwendet werden.

Die so hergestellten beschichteten Kunststofffolien können dann weiter verklebt werden, indem die beschichtete Folie, bzw. der darauf befindliche Heissschmelzklebstoff **K,** erhitzt, bzw. an- oder aufgeschmolzen wird, entsprechend Schritt iv'), und dann mit der Oberfläche eines Substrats **S2** kontaktiert wird, entsprechend Schritt v') im vorgängig beschriebenen Verfahren.

Nach dem Kontaktieren des Klebstoffes mit der Oberfläche des Substrates **S2,** d.h. nach dem Schritt iii), v') bzw. ii"), erkaltet der Heissschmelzklebstoff **K** und verfestigt sich. Durch diese Verfestigung erfolgt der Aufbau einer Anfangsfestigkeit, so dass geringe Kräfte zwischen den Substraten bereits übertragen werden können und unter Umständen ein Abrutschen eines Substrates verhindert werden kann und ein Transportieren erfolgen kann. Durch die Reaktion von Wasser mit dem Klebstoff erfolgt die Vernetzung des Klebstoffs, was zum Aufbau der Endfestigkeit und der Wärmebeständigkeit führt. Die Reaktion mit Wasser setzt ein, sobald der Klebstoff mit Luftfeuchtigkeit in Kontakt kommt, d.h. im Allgemeinen schon zu Beginn der Applikation. Die Endfestigkeit wird erreicht, wenn die Vernetzung vollständig abgelaufen ist; dies kann sehr unterschiedlich lange dauern, typischerweise einige Tage, und hängt stark von den klimatischen Bedingungen, den Substraten sowie der Klebegeometrie und -stärke ab.

Aus diesem Verfahren des Verklebens resultiert ein Artikel. Der so gebildete Artikel ist vorteilhaft ein Artikel der industriellen Fertigung und ist insbesondere ein Artikel für den Innenausbau. Bevorzugt ist er ein Einbauteil in einem Transportmittel oder wird in der Möbelbranche eingesetzt.

Besonders wichtig ist der Einsatz der beschichteten Kunststofffolie, bzw. des beschriebenen Verfahrens, für die Herstellung von Innenauskleidungsteilen von Fahrzeugen, insbesondere von Automobilen. Bespiele für derartige Innenauskleidungsteile sind Türseitenteile, Schalttafeln, Hutablagen, Fertighimmel, Schiebehimmel, Mittelkonsolen, Handschuhfächer, Sonnenblenden, Säulen, Tür- und Armgriffe, Boden-, Ladeboden- und Kofferraumgruppen sowie Schlafkabinen- und Rückwände der Liefer- und Lastkraftwagen.

Hierfür wird insbesondere ein Vakuumtiefziehverfahren oder eine Presskaschierung im Siegelverfahren verwendet.

Beim Vakuumtiefziehverfahren kann der Heissschmelzklebstoff **K** auf das Substrat **S2,** auch als Träger bezeichnet, aufgetragen werden, oder es kann eine mit Heissschmelzklebstoff **K** beschichtete Kunststofffolie zum Einsatz kommen. Typischerweise wird die Kunststofffolie (Dekor aus luftundurchlässigem Material), insbesondere aus Weich-PVC, in einem Rahmen luftdicht eingespannt. Unterhalb der Folie befindet sich eine Unterform, auf die der Träger gelegt wird. Unterform und Träger sind durchbohrt beziehungsweise luftdurchlässig. Das Gerät ist unterwärts weiter luftdicht abgeschlossen. Das Dekormaterial wird vor dem Anlegen des Vakuums, bzw. Unterdruckes, erhitzt, typischerweise auf eine Temperatur von etwa 160 °C, so dass die Folie weich wird und der Heissschmelzklebstoff an- oder aufschmilzt. Beim Absaugen der Luft aus dieser Vorrichtung schmiegt sich nun das Dekormaterial unter dem auf seiner Oberfläche lastenden atmosphärischen Druck passgenau an das Trägerteil und verklebt mit diesem. Das Dekormaterial ist wegen des zu erzeugenden Vakuums, bzw. Unterdruckes, luftundurchlässig. Beim Vakuumtiefziehen kann auch eine wie vorgängig mit Heissschmelzklebstoff **K** beschichtete Kunststofffolie, insbesondere aus Weich-PVC, verwendet werden, welche vor dem Kontaktieren, bzw. vor dem Anlegen des Vakuums, erwärmt wird.

Beim Presskaschierungsverfahren kann der Heissschmelzklebstoff **K** ebenfalls auf den Träger aufgetragen, bzw. auf dem Dekor, d.h. der Kunststofffolie, vorgängig aufgetragen werden. Die Verklebung vom Träger mit dem Dekor erfolgt nach Wärmeaktivierung durch beispielsweise ein IR-Strahlerfeld auf eine Temperatur von typischerweise über 80°C, so dass der Klebstoff zumindest anschmilzt, unter Fügen und Pressen (Fugentemperatur >50°C).

Die hier benutzten Folien aus einem Weichmacher enthaltenden Kunststoff sind vielfach Dekorfolien und weisen eine Oberflächenstruktur auf. Diese Oberflächenstruktur auf der Kunststofffolie kann vor, während oder nach dem Verkleben eingeprägt werden.

Der Träger ist vorzugsweise ein Kunststoff, welcher keine Weichmacher enthält. Als besonders bevorzugte Träger gelten Träger aus Polycarbonat (PC) oder Acrylonitril-Butadien-Styrol-Copolymer (ABS) oder aus einer PC/ABS-Mischung oder aus einem PC/ABS-Verbundwerkstoff.

Somit ist in einer meist bevorzugten Ausführungsform der gebildete Artikel ein mit Weich-PVC-Folie kaschierter Träger.

In einer weiteren bevorzugten Ausführungsform wird das Verfahren zum Verkleben von zwei Folien verwendet, wobei zumindest eine, bevorzugt beide, Folien aus einem Weichmacher enthaltenden Kunststoff, insbesondere aus Weich-PVC, besteht. Besonders bevorzugt wird es für das Verkleben von zwei Weich-PVC-Folien verwendet. Es ist besonders geeignet für das Verkleben von Abdichtungsbahnen, wie sie typischerweise zum Abdichten von Tunnels, Dächern oder Schwimmbädern eingesetzt werden und welche eine Dicke von typischerweise 1 bis 3 mm, in Spezialfällen sogar bis 5 mm, aufweisen. Typischerweise werden derartige Folien an den Rändern überlappend verklebt. Somit finden die gezeigten Verfahren auch im Tief- und Hochbau Anwendung, und der resultierende Artikel kann ein Artikel des Tief- oder Hochbaus sein.

Derartig verklebte Folien weisen im Verklebungsbereich eine starke Reduktion der Folienversprödung auf.

Es zeigte sich, dass sich bei den beschriebenen Verklebungen mit dem Heissschmelzklebstoff **K** stark verbesserte Haftungen des Klebverbundes erreicht wurden, und dass insbesondere der auf den Klebstoff und den Schichtverbundkörper negativen Einfluss von Wärme-/Feucht- bzw. Wechsellagerungen stark verbessert werden konnte und die Migration des Weichmachers aus dem Weichmacher enthaltenden Kunststoff in den Klebstoff deutlich reduziert werden konnte.

### Kurze Beschreibung der Zeichnungen

Im Folgenden wird die Erfindung anhand von Zeichnungen schematisch weiter veranschaulicht. Gleiche Elemente sind in den verschiedenen Figuren mit den gleichen Bezugszeichen versehen. Bewegungen sind mit Pfeilen angegeben. Es zeigen
- Fig. 1: Aufbau eines Schichtverbundkörpers
Fig.1a einen schematischen Querschnitt durch einen Schichtverbundkörper mit zwei plattigen Substraten **S1** und **S2**
Fig. 1b einen schematischen Querschnitt durch einen Schichtverbundkörper mit einem plattigen Substrat **S1**
- Fig. 2: Aufbau einer mit Heissschmelzklebstoff K beschichteten Kunststofffolie
Fig.2a einen schematischen Querschnitt durch eine mit Heissschmelzklebstoff K beschichteten Kunststofffolie
Fig. 2b einen Querschnitt durch ein schematisches Herstellverfahren für eine mit Heissschmelzklebstoff **K** beschichteten Kunststofffolie.

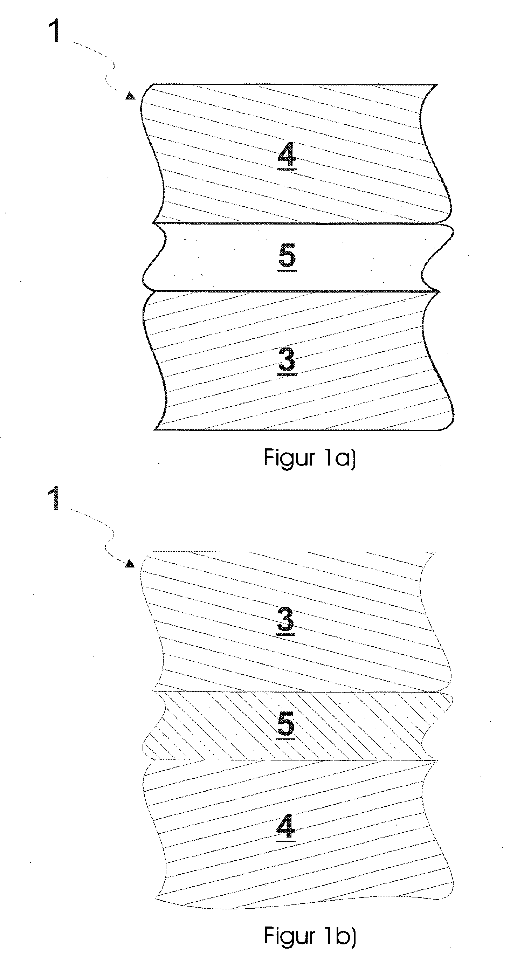

Figur 1a zeigt einen Schichtverbundkörper 1, welcher aus einem Substrat **S1** 3 (erstes Substrat), einem Substrat **S2** 4 (zweites Substrat) und einem Heissschmelzklebstoff **K** 5 besteht, wobei der Klebstoff **K** 5 mit den Oberflächen der zwei Substrate **S1** 3 und **S2** 4 in Kontakt steht und einen Klebverbund zwischen den Substraten herstellt. Die zwei Substrate sind in der hier gezeigten Darstellung beide plattig. Ein Beispiel für die hier dargestellte Ausführungsform eines Schichtverbundkörpers stellt eine Verklebung von zwei Kunststofffolien, insbesondere von zwei Weich-PVC-Folien, mit Hilfe eines Klebstoffes K dar.

Figur 1b zeigt einen Schichtverbundkörper 1, welcher aus einem Substrat **S1** 3 (erstes Substrat), einem Substrat **S2** 4 (zweites Substrat) und einem Heissschmelzklebstoff **K** 5 besteht, wobei der Klebstoff **K** 5 mit den Oberflächen der zwei Substrate **S1** 3 und **S2** 4 in Kontakt steht und einen Klebverbund zwischen den Substraten herstellt. In der hier gezeigten Ausführungsform ist das Substrat **S1** 3 plattig ausgebildet. Ein Beispiel für die hier dargestellte Ausführungsform eines Schichtverbundkörpers stellt die Kaschierung eines Trägers **S2** 4 mit einer Weichmacher enthaltenden Kunststofffolie **S1** 3, bevorzugt einer Weich-PVC-Folie, mit Hilfe eines Klebstoffes **K** 5 dar.

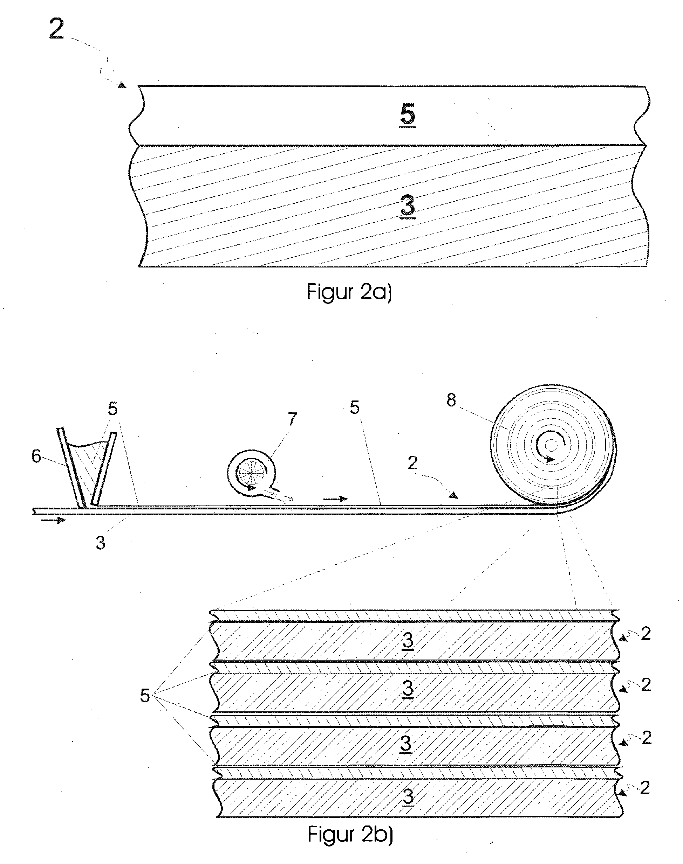

Figur 2a zeigt eine mit einem Heissschmelzklebstoff **K** 5 beschichtete Kunststofffolie 2. Der Heissschmelzklebstoff **K** 5 ist hierbei auf eine Kunststofffolie **S1** 3 schichtartig appliziert worden.

Figur 2b zeigt schematisch die Herstellung einer beschichteten Kunststofffolie 2. In der hier gezeigten Ausführungsform wird der Heissschmelzklebstoff **K** 5 mittels Auftrageinheit 6 auf die Kunststofffolie **S1** 3 als Schicht aufgetragen. Hierbei wird die Kunststofffolie unter der Auftrageeinheit 6 bewegt. Typischerweise wird die Kunststofffolie von einer Rolle (nicht gezeigt) abgewickelt. Anschliessend an den Auftrag wird der geschmolzene Klebstoff **K** 5 mittels Abkühlmittel 7 (beispielsweise ein Luftgebläse) abgekühlt. Die Figur 2b zeigt weiterhin, dass diese beschichtete Kunststofffolie 2 aufgerollt wird. Weiterhin ist in Figur 2b im unteren Teil ein vergrösserter schematischer Ausschnitt einer Rolle 8 mit aufgerollter beschichteter Kunststofffolie 2 gezeigt. Durch das Aufrollen der beschichteten Kunststofffolie bedingt, sind die einzelnen Lagen der beschichteten Kunststofffolie 2 in direktem Kontakt miteinander und weisen insbesondere keine Zwischenlagen eines Trennpapiers auf. Die beschichtete Kunststofffolie kann bei Bedarf ohne Blocken, auch nach längerer Lagerungs- oder Transportzeit, von der Rolle 8 abgewickelt werden.

Ein derartige beschichtete Kunststofffolie 2 wird bei Bedarf erhitzt, so dass sie, bzw. der Heissschmelzklebstoff **K** 5, weich wird bzw. zumindest angeschmolzen wird und mit einem Substrat **S2** 4 kontaktiert und typischerweise unter Druck verklebt, so dass ein Schichtverbundkörper 1, wie er in Figur 1b dargestellt ist, entsteht.

### Bezugszeichenliste

| | | | |
|---|---|---|---|
| 1 | Schichtverbundkörper | 5 | Heissschmelzklebstoff **K** |
| 2 | Beschichtete Kunststofffolie | 6 | Auftrageeinheit |
| 3 | Substrat **S1** | 7 | Abkühlmittel |
| 4 | Substrat **S2** | 8 | Rolle einer beschichteten Kunststofffolie 2 |

### Beispiele

### Herstellung von Aldiminen

### Aldimin A-1

In einem Rundkolben wurden unter Stickstoffatmosphäre 74.3 g (0.26 mol) destilliertes 2,2-Dimethyl-3-lauroyloxy-propanal vorgelegt. Unter kräftigem Rühren wurden aus einem Eintropftrichter 30.0 g (0.25 mol N) Polyetherdiamin (Polyoxypropylen-Diamin mit einem mittleren Molekulargewicht von ca. 240 g/mol; Jeffamine® D-230, Huntsman; Amingehalt 8.29 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 99.5 g eines klaren, blassgelben Öls mit einem Amingehalt von 2.50 mmol N/g.

### Aldimin A-2

In einem Rundkolben wurden unter Stickstoffatmosphäre 28.06 g (0.099 mol) destilliertes 2,2-Dimethyl-3-lauroyloxy-propanal vorgelegt. Unter kräftigem Rühren wurden aus einem Eintropftrichter innerhalb von 3 Minuten 10.00 g (0.095 mol) 2-(2-Aminoethoxy)-ethanol (Diglycolamine^{®} Agent; Huntsman) zugegeben, wobei die Temperatur des Reaktionsgemisches auf 40 °C anstieg. Danach wurden die flüchtigen Bestandteile im Vakuum entfernt (10 mbar, 80 °C). Ausbeute: 36.3 g einer farblosen, bei Raumtemperatur dünnflüssigen, klaren und geruchlosen Flüssigkeit mit einen Amin-Gehalt von 2.58 mmol N/g.

### Herstellung von Heissschmelzklebstoffen

Für die folgenden Versuche wurde SikaMelt^{®}-9633/61, kommerziell erhältlich bei Sika Automotive GmbH, Hamburg, (im Folgenden als ,*9633*/*61'* bezeichnet) verwendet, zu welchem gemäss Tabelle 1 gegebenenfalls Aldimine in der angegebenen Menge in die Schmelze unter Rühren und Stickstoff zugeben wurde. SikaMelt^{®}-9633/61 ist ein Heissschmelzklebstoff, welcher eine Mischung von Isocyanatgruppen aufweisenden Prepolymeren basierend auf einem bei Raumtemperatur festen Polyesterpolyol und einem bei Raumtemperatur flüssigen Polyesterpolyol, und MDI als Polyisocyanat, enthält und Weichmacher-frei ist.

Das Aldimin in den Beispielen ***1*** und ***2*** (Aldimin *A-1*) entspricht der Formel (I-A). Das Aldimin (Aldimin *A-2*) im Beispiel ***3*** reagiert in situ mit dem im Heissschmelzklebstoff enthaltenen Isocyanatgruppen aufweisenden Polyurethanpolymer und es entseht in situ ein Aldimin entsprechend der Formel (I-B).

### Messmethoden:

### Viskosität:

Nach dem Aufschmelzen des jeweiligen Heissschmelzklebstoffes in einer verschlossenen Tube während 20 Minuten bei 140°C im Wärmeschrank wurden 12.3 mg Klebstoff in eine Einweghülse abgewogen und während 20 Minuten im Viskosimeter bei der jeweiligen in Tabelle 1 angegebenen Temperatur temperiert. Die Messung der Viskosität erfolgte bei 1, resp. 5 oder 10 Umdrehungen pro Minute (UpM, rpm) auf einem Brookfield DV-2 Thermosel Viskosimeter mit Spindel Nr. 27. Als Viskosität wird derjenige Wert ausgewählt, der sich nach 5 Minuten Messung einstellt.

### Offenzeit:

Die Offenzeit wurde folgendermassen bestimmt: Der geschmolzene Klebstoff wurde bei einer Temperatur von 150°C in einer Dicke von 500 µm mittels Rakel auf ein mit Silikon beschichtetes Papier aufgezogen. Dieser Prüfkörper wurde anschliessend auf einen raumtemperaturwarmen Untergrund gelegt. Sobald sich ein leicht auf den Klebstoff gedrückter Papierstreifen vom Klebstoff lösen liess, war die Offenzeit vorbei. Anschliessend härtete der Klebstoff jeweils aus und wurde fest.

### Durchhärtung 500µm:

Nach dem Aufschmelzen des jeweiligen Heissschmelzklebstoffes in einer verschlossenen Tube während 20 Minuten bei 150°C im Wärmeschrank wurde der Klebstoff in einer Dicke von 500 µm mittels Rakel auf ein mit Silikon beschichtetes Papier aufgezogen. Der Film wurde bei 55 % rel. Luftfeuchtigkeit und Raumtemperatur gelagert. In regelmässigen Abständen wurde ein Teil des Klebstofffilmes auf die Heizplatte gelegt und begutachtet. Der Zeitpunkt der Lagerung, bei dem kein Aufschmelzen mehr zu beobachten war, weil der Klebstoff ausgehärtet war, wurde als Durchhärtungszeit angegeben.

### Festigkeit nach 30min (Anfangsfestigkeit):

Nach dem Aufschmelzen des jeweiligen Heissschmelzklebstoffes in einer verschlossenen Tube während 20 Minuten bei 150°C im Wärmeschrank wurden Zugscherprobekörper wie folgt hergestellt: der Klebstoff wurde auf eine Seite eines Holzprüfkörpers (100mmx25mm*5mm) aufgetragen; durch leichten Druck wurde er auf den anderen Holzprüfkörper gepresst, die Verklebung wurde mit einem 500 g Gewicht fixiert. Die Verklebungsfläche betrug 25 mm x 25 mm und die Klebstoffdicke 1 mm. Nach 30 Minuten Lagerung bei 55 % rel. Luftfeuchtigkeit und Raumtemperatur wurde die Zugscherfestigkeit bestimmt und in Tabelle 1 als "Festigkeit nach 30min" angegeben.

### Zugfestigkeit l Dehnung

Die Zugfestigkeit und die Bruchdehnung wurden in Anlehnung an DIN 53504 an Prüfkörpern mit einer Schichtdicke von 500 µm und den Abmessungen 120 mm x 20 mm bestimmt. Die Filme zur Herstellung der Prüfkörper wurden bei einer Klebstofftemperatur von 140 °C appliziert und anschliessend während 2 Wochen bei 23 °C und 50 % relativer Luftfeuchtigkeit gelagert.

Weiterhin wurden die Zugfestigkeiten / Dehnungen nach Lagerung während 7 Tagen bei 90°C und 100% rel. Luftfeuchtigkeit, beziehungsweise nach BMW-Test 3.08, ermittelt und in Tabelle 1 angegeben. Die %-Angaben bei den Werten nach Wärme-/Feucht- bzw. Wechsellagerung sind bezogen auf die gemessenen Werte ohne Wärme-/Feucht- bzw. Wechsellagerung.

### Rollschälfestigkeit

Die Rollschälfestigkeit (RSF) (90°) wurde nach DIN 53 289 ermittelt mit einer Zuggeschwindigkeit von 80 mm/min auf einem Prüfgerät der Firma Zwick (Zwick Z2.5) Aushärtung und Lagerung entsprechen denjenigen, wie sie bei der Zugfestigkeit und Dehnung angeben wurden.

**Tabelle 1. Heissschmelzklebstoffe und Ergebnisse.**

| | | 815 | 806 | 823 |
|---|---|---|---|---|
| | ***Ref.1*** | ***1*** | ***2*** | ***3*** |
| *9633*/*61* [Gewichts-Teile] | 100 | 100 | 100 | 100 |
| *A-1* [Gewichts-Teile] | - | 9.5 | 10.5 | |
| *A-2* [Gewichts-Teile] | - | | | 9.2 |
| Viskosität (110°C,1 rpm) [mP.s] | 97'000 | 69'500 | 89'000 | 173'000 |
| Viskosität (130°C,5 rpm) [mP·s] | 29'700 | 31'500 | 39'600 | 93'000 |
| Viskosität (150°C, 10 rpm) [mP·s] | 16'100 | 16'500 | 19'000 | 45'000 |
| Offenzeit | 35 sec | 25 sec | 15-20 sec | 40 sec |
| Durchhärtung 500µm | 27 h | 27 h | ~28h | n.m.* |
| Shore A-Härte | 96 | 90 | 90 | n.m.* |
| Shore D-Härte | 57 | 37 | 30 | n.m.* |
| Festigkeit nach 30min [MPa] | 0.35 | 0.31 | 0.20 | n.m.* |
| Zugfestigkeit [MPa] | 20.9 | 16.5 | 18.9 | n.m.* |
| Bruchdehnung [%] | 540 | 790 | 750 | n.m.* |
| Zugfestigkeit (7d, 90%, 100% r.F.)[MPa] | 4.3 (21%) | 9.2 (58%) | 9.8 (52%) | n.m.* |
| Bruchdehnung (7d, 90%, 100% r.F.) [%] | 35 (6%) | 40 (5%) | 190 (25%) | n.m.* |
| Zugfestigkeit (nach BMW 3.08)[MPa] | 15.6 (75%) | 20.5 (124%) | 16.1 (85%) | n.m.* |
| Bruchdehnung (nach BMW 3.08) [%] | 510 (94%) | 750 (95%) | 535 (74%) | n.m.* |
| RSF**(100°C) (nach BMW 3.08) [N/cm] | 0.00 | 1.05 | 0.34 | 3.34 |

| | | | | |
|---|---|---|---|---|
| *n.m.=nicht gemessen **RSF= Rollschälfestigkeit | | | | |

Im Weiteren wurden mittels Tiefzieh- bzw. Presskaschierungsprozess Schichtverbundkörper hergestellt.

Bei der Tiefziehkaschierung wurde die Weich-PVC-Folie mit dem jeweiligen Klebstoff mittels Walze bei einer Temperatur von 140°C und einer Geschwindigkeit von 5 m / Minute und einer Auftragsmenge von 95g / m² beschichtet. Diese beschichtete Folie wurde mittels Vakuum auf einen ABS-Träger aufgebracht (Fugentemperatur 75-80°C, Kaschierzeit 30 Sekunden, Abkühlung auf 40°C bis Entformung). Die so kaschierten Proben wurden während 7 Tagen bei 55% rel. Luftfeuchtigkeit und 23°C gelagert. Die Wechsellagerung erfolgte während 10 Tage gemäss BMW 3.08 Wechseltest.

Bei der Presskaschierung wurde der jeweilige geschmolzenen Heissschmelzklebstoff als ein Transferfilm in einer Schichtdicke von 100 µm auf ein Silikonpapier bei 150°C aufgerakelt. Anschliessend wurde der Klebstofffilm auf eine Weich-PVC-Folie bei 150°C transferiert. Nach einer Reaktivierung des Klebstoffs durch Erhitzen während 20 Sekunden auf eine Temperatur von 150°C wurde die beschichtete PVC Folie auf einen ABS-Träger gepresst (Platte oben und unten je 90°C beheizt, Pressdauer 10 Sekunden bei Presskraft von 1000N). Die so kaschierten Proben wurden während 7 Tagen bei 55% rel. Luftfeuchtigkeit und 23°C gelagert. Die Wechsellagerung erfolgte 10 Tage gemäss BMW 3.08 Wechseltest.

Von diesen so hergestellten Schichtverbundkörpern wurde die Rollschälfestigkeit bestimmt.

**Tabelle 2. Rollschälfestigkeiten von mit Weich-PVC-Folien kaschierten ABS-Trägern, hergestellt durch Tiefzieh- oder Presskaschierung, bei unterschiedlichen Ziehtemperaturen und nach unterschiedlichen Lagerungen.**

| | Tiefzieh-Kaschierung | | Press-Kaschierung | |
|---|---|---|---|---|
| | ***Ref.1*** | ***1*** | ***Ref.1*** | ***1*** |
| RSF*(23°C) [N/cm] | 22 | 37.8 | 7.4 | 9.8 |
| RSF* (100°C) [N/cm] | 5.6 | 6.5 | 3.5 | 11.4 |
| RSF*(23°C) (nach BMW 3.08) [N/cm] | 30 | 39 | 16 | 48 |
| RSF*(100°C) (nach BMW 3.08) [N/cm] | 1.1 | 2.7 | 0.2 | 8 |

| | | | | |
|---|---|---|---|---|
| *RSF=Rollschälfestigkeit | | | | |

Die Ergebnisse der Tabellen 1 und 2 zeigen, dass die Polyaldimin enthaltenden Heissschmelzklebstoffe bedeutend bessere Rollschälfestigkeiten mit den Weichmacher enthaltenden PVC-Substraten aufweisen als die entsprechenden Heissschmelzklebstoffe ohne Polyaldimin. Zudem zeigt sich, dass der auf die mechanischen Eigenschaften negative Einfluss von Wärme-/Feucht- bzw. Wechsellagerung durch die Verwendung von Polyaldiminen in den Klebstoffen stark vermindert werden kann.

## Patentansprüche

1. Schichtverbundkörper (1) aufweisend
a) mindestens ein Substrat **S1** (3);
b) mindestens einen Heissschmelzklebstoff **K** (5);
c) mindestens ein Substrat **S2** (4),
wobei
das Substrat **S1** und/oder das Substrat **S2** ein Weichmacher enthaltender Kunststoff ist,
das Substrat **S1** und/oder das Substrat **S2** gegebenenfalls mit einem Primer vorbehandelt ist; und
das Substrat **S1** mit dem Substrat **S2** über den Heissschmelzklebstoff **K** miteinander verbunden ist,
**dadurch gekennzeichnet, dass** der Heissschmelzklebstoff **K** (5) mindestens ein bei Raumtemperatur festes, Isocyanatgruppen aufweisendes Polyurethanpolymer **P** und mindestens ein Aldimin **A;** umfasst.

2. Schichtverbundkörper (1) gemäss Anspruch 1, **dadurch gekennzeichnet, dass** das Substrat **S1** (3) und/oder das Substrat **S2** (4) Weich-Polyvinylchlorid (Weich-PVC) ist.

3. Schichtverbundkörper (1) gemäss Anspruch 1 oder 2, **dadurch gekennzeichnet, dass** das Substrat **S1** (3) und/oder das Substrat **S2** (4) ein Polycarbonat (PC) oder ein Acrylonitril-Butadien-Styrol-Copolymer (ABS) oder eine PC/ABS-Mischung oder ein PC/ABS-Verbundwerkstoff ist.

4. Schichtverbundkörper (1) gemäss einem der vorhergehenden Ansprüche, **dadurch gekennzeichnet, dass** das bei Raumtemperatur feste, Isocyanatgruppen aufweisende Polyurethanpolymer **P** hergestellt wird aus mindestens einem Polyisocyanat und mindestens einem Polyol, insbesondere einem bei Raumtemperatur festen Polyol, bevorzugt einem bei Raumtemperatur festen Polyesterpolyol.

5. Schichtverbundkörper (1) gemäss einem der vorhergehenden Ansprüche, **dadurch gekennzeichnet, dass** das Aldimin **A** die Formel (I-A) aufweist, 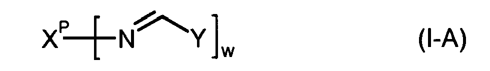
wobei X^{P} für ein Polyamin mit w primären Aminogruppen nach Entfernung von w primären Aminogruppen steht;
w für eine ganze Zahl von 2 - 8, insbesondere von 2 - 4, bevorzugt für 2 oder 3, steht
und Y für einen Rest der Formel (Ia) oder (Ib) steht, 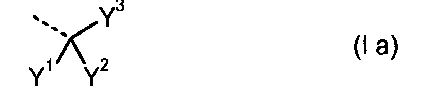 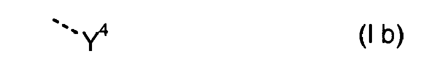 wobei
Y¹ und Y² entweder
unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen ist, stehen;
Y³ für einen einwertigen Kohlenwasserstoffrest, welcher gegebenenfalls mindestens ein Heteroatom, insbesondere Sauerstoff in Form von Ether-, Carbonyl- oder Ester-Gruppen, aufweist, steht; und
Y⁴ entweder
für eine substituierte oder unsubstituierte Aryl- oder Heteroaryl-Gruppe, welche eine Ringgrösse von 5 bis 8, bevorzugt 6, Atomen aufweist, steht,
oder für 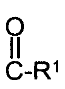 steht, wobei R¹ für ein Wasserstoffatom oder für eine Alkoxygruppe steht,
oder für eine substituierte oder unsubstituierte Alkenyl- oder Arylalkenylgruppe mit 1 - 30 C-Atomen steht.

6. Schichtverbundkörper (1) gemäss Anspruch 5, **dadurch gekennzeichnet, dass** das sich vom Rest X^{P} ableitende Polyamin ausgewählt ist aus der Gruppe bestehend aus 1,6-Hexamethylendiamin, 1,5-Diamino-2-methylpentan (MPMD), 1,3-Diaminopentan (DAMP), 1-Amino-3-aminomethyl-3,5,5-trimethylcyclohexan (= Isophorondiamin oder IPDA), 2,2,4- und 2,4,4-Trimethylhexamethylendiamin, 4-Aminomethyl-1,8-octandiamin, 1,3- und 1,4-Xylylendiamin, 1,3- und 1,4-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2.6}]decan, 1,2-, 1,3-und 1,4-Diaminocyclohexan, Polyoxyalkylen-Diaminen und -Triaminen, sowie Mischungen von zwei oder mehr der vorgenannten Polyamine.

7. Schichtverbundkörper (1) gemäss einem der Ansprüche 1 - 4, **dadurch gekennzeichnet, dass** das Aldimin **A** die Formel (I-B) aufweist 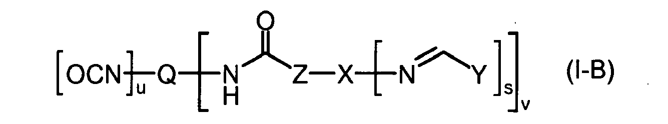 wobei
Q für den Rest eines (u+v) endständige Isocyanatgruppen aufweisenden Polyisocyanats nach Entfernung aller Isocyanatgruppen steht;
u für 0 oder 1 oder 2 steht;
v für 1 oder 2 oder 3 steht;
s für 1 oder 2, bevorzugt 1, steht
Y für den Rest der Formel (Ia) oder (Ib) steht, 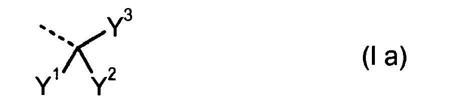 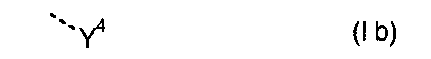 wobei
Y¹ und Y² entweder
unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen ist, stehen; Y³ für einen einwertigen Kohlenwasserstoffrest, welcher gegebenenfalls mindestens ein Heteroatom, insbesondere Sauerstoff in Form von Ether-, Carbonyl- oder Ester-Gruppen, aufweist, steht; und
Y⁴ entweder
für eine substituierte oder unsubstituierte Aryl- oder Heteroaryl-Gruppe, welche eine Ringgrösse von 5 bis 8, bevorzugt 6, Atomen aufweist, steht,
oder für 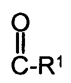 steht, wobei R¹ für ein Wasserstoffatom oder für eine Alkoxygruppe steht,
oder für eine substituierte oder unsubstituierte Alkenyl- oder Arylalkenylgruppe mit 1 - 30 C-Atomen steht;
und
X entweder
für einen (s+1)-wertigen, gegebenenfalls Heteroatome aufweisenden, Kohlenwasserstoffrest mit bevorzugt 2 bis 20 C-Atomen steht, oder, falls Z für N-R⁷ steht, zusammen mit R⁷ für einen (s+2)-wertigen Kohlenwasserstoffrest mit bevorzugt 3 bis 20 C-Atomen, welcher gegebenenfalls mindestens ein Heteroatom, insbesondere in Form von Ether-Sauerstoff oder tertiärem Amin-Stickstoff, enthält, steht;
Z für O, S, NH, NR² oder NR⁷ steht,
wobei R²
entweder
für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureestergruppe aufweist, steht,
oder
für einen Substituenten der Formel (X) steht, 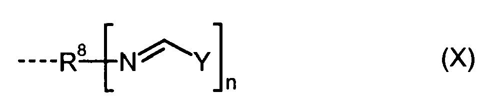 wobei
n für 1 oder 2 steht,
R⁸ für einen (n+1)-wertigen Kohlenwasserstoffrest, welcher gegebenenfalls Heteroatome, insbesondere in Form von Ether-Sauerstoff oder tertiärem Amin-Stickstoff, und gegebenenfalls aktiven Wasserstoff in Form von Hydroxylgruppen, sekundären Aminogruppen oder Mercaptogruppen enthält, steht; und
R⁷ zusammen mit X für einen (s+2)-wertigen Kohlenwasserstoffrest mit bevorzugt 3 bis 20 C-Atomen, welcher gegebenenfalls mindestens ein Heteroatom, insbesondere in Form von Ether-Sauerstoff oder tertiärem Amin-Stickstoff, enthält, steht;
mit der Massgabe, dass u+(v*s) für einen Wert von 2 ≥ steht.

8. Schichtverbundkörper (1) gemäss Anspruch 7, **dadurch gekennzeichnet, dass** Q für ein (u+v) endständige Isocyanatgruppen aufweisendes Polyurethanpolymer **PUP** nach Entfernung aller Isocyanatgruppen steht, welches insbesondere erhältlich ist aus der Umsetzung von mindestens einem Polyol mit mindestens einem Polyisocyanat, vorzugsweise aus mindestens einem Diol und mindestens einem Diisocyanat.

9. Schichtverbundkörper (1) gemäss Anspruch 8, **dadurch gekennzeichnet, dass** das (u+v) endständige Isocyanatgruppen aufweisende Polyurethanpolymer **PUP** ein bei Raumtemperatur festes, Isocyanatgruppen aufweisendes Polyurethanpolymer **PUP1** ist.

10. Schichtverbundkörper (1) gemäss einem der Ansprüche 7 - 9, **dadurch gekennzeichnet, dass** das sich vom Rest X ableitende Amin ausgewählt ist aus der Gruppe bestehend aus N-Methyl-1,2-ethandiamin, N-Ethyl-1,2-ethandiamin, N-Cyclohexyl-1,2-ethandiamin, N-Methyl-1,3-propandiamin, N-Ethyl-1,3-propandiamin, N-Butyl-1,3-propandiamin, N-Cyclohexyl-1,3-propandiamin, 4-Aminomethyl-piperidin, 3-(4-Aminobutyl)-piperidin, Diethylentriamin (DETA), Bis-hexamethylentriamin (BHMT), Dipropylentriamin (DPTA), Fettdiaminen, wie N-Cocoalkyl-1,3-propandiamin, N-Oleyl-1,3-propandiamin, N-Soyaalkyl-1,3-propandiamin und N-Talgalkyl-1,3-propandiamin; 5-Amino-1-pentanol, 6-Amino-1-hexanol, 4-(2-Aminoethyl)-2-hydroxyethylbenzol, 3-Aminomethyl-3,5,5-trimethyl-cyclohexanol, 2-(2-Aminoethoxy)-ethanol, Triethylenglykol-monoamin, 3-(2-Hydroxyethoxy)-propylamin, 3-(2-(2-Hydroxyethoxy)-ethoxy)-propylamin und 3-(6-Hydroxyhexyloxy)-propylamin.

11. Schichtverbundkörper (1) gemäss einem der Ansprüche 7 - 9, **dadurch gekennzeichnet, dass** Z für NH steht und X für den Rest eines asymmetrischen Diamins mit zwei primären Aminogruppen nach Entfernung dieser zwei Aminogruppen steht.

12. Schichtverbundkörper (1) gemäss Anspruch 11, **dadurch gekennzeichnet, dass** das asymmetrische Diamin ausgewählt ist aus der Gruppe bestehend aus 1,2-Propandiamin, 2-Methyl-1,2-propandiamin, 1,3-Butandiamin, 1,3-Diaminopentan (DAMP), 2,2,4-Trimethylhexamethylendiamin (TMD), 1,5-Diamino-2-butyl-2-ethyl-pentan, 1-Amino-3-aminomethyl-3,5,5-trimethylcyclohexan (= Isophorondiamin oder IPDA) und 1,4-Diamino-2,2,6-trimethylcyclohexan (TMCDA).

13. Schichtverbundkörper (1) gemäss einem der Ansprüche 5 - 12, **dadurch gekennzeichnet, dass** Y für den Rest der Formel (Ia) steht.

14. Schichtverbundkörper (1) gemäss einem der Ansprüche 5 - 13, **dadurch gekennzeichnet, dass** Y¹ und Y² jeweils für Methyl stehen.

15. Schichtverbundkörper (1) gemäss einem der Ansprüche 5 - 14, **dadurch gekennzeichnet, dass** Y³ für einen Rest der Formel (II) oder (III), bevorzugt für einen Rest der Formel (III), steht, 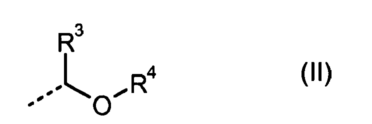 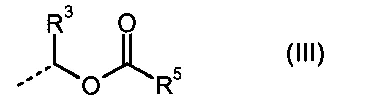
wobei R³ für ein Wasserstoffatom oder für eine Alkyl- oder Arylalkylgruppe, bevorzugt für ein Wasserstoffatom, steht;
R⁴ für einen Kohlenwasserstoffrest mit 1 bis 30, insbesondere 11 bis 30, C-Atomen, der gegebenenfalls Heteroatome enthält, steht; und
R⁵ entweder
für ein Wasserstoffatom steht,
oder
für einen linearen oder verzweigten Alkylrest mit 1 bis 30, insbesondere 11 bis 30, C-Atomen, gegebenenfalls mit cyclischen Anteilen und gegebenenfalls mit mindestens einem Heteroatom, steht,
oder
für einen einfach oder mehrfach ungesättigten, linearen oder verzweigten Kohlenwasserstoffrest mit 5 bis 30 C-Atomen steht,
oder
für einen, gegebenenfalls substituierten, aromatischen oder heteroaromatischen 5- oder 6-gliedrigen Ring steht.

16. Schichtverbundkörper (1) gemäss einem der vorhergehenden Ansprüche, **dadurch gekennzeichnet, dass** der Heissschmelzklebstoff **K** (5) im Wesentlichen frei ist von Weichmachern.

17. Schichtverbundkörper (1) gemäss einem der vorhergehenden Ansprüche, **dadurch gekennzeichnet, dass** der Heissschmelzklebstoff **K** (5) unter dem Einfluss von Wasser, insbesondere in Form von Luftfeuchtigkeit, vernetzt worden ist.

18. Beschichtete Kunststofffolie (2), **dadurch gekennzeichnet, dass** sie erhalten wird durch ein Applizieren eines Heissschmelzklebstoffes **K** (5), wie er in einem Schichtverbundkörper gemäss einem der Ansprüche 1 bis 17 beschrieben ist, in aufgeschmolzenem Zustand auf eine Folie aus einem Weichmacher enthaltenden Kunststoff, insbesondere auf eine Weich-PVC-Folie.

19. Verfahren zum Verkleben von einem Weichmacher enthaltenden Kunststoff umfassend die Schritte
i) Schmelzen eines Heissschmelzklebstoffes **K** (5)
ii) Applizieren des geschmolzenen Heissschmelzklebstoffes **K** (5) auf ein Substrat **S1** (3)
iii) Kontaktieren der Oberfläche eines Substrates **S2** (4) mit dem Heissschmelzklebstoff **K** (5) innerhalb dessen Offenzeit;
oder
i') Schmelzen eines Heissschmelzklebstoffes **K** (5)
ii') Applizieren des geschmolzenen Heissschmelzklebstoffes **K** (5) auf ein Substrat **S1** (3)
iii') Abkühlen des Heissschmelzklebstoffes **K** (5) auf Raumtemperatur
iv') Aufschmelzen des auf dem Substrat **S1** (3) befindlichen Heissschmelzklebstoffes **K** (5)
v') Kontaktieren der Oberfläche eines Substrates **S2** (4) mit dem
Heissschmelzklebstoff **K** (5);
oder
i") Schmelzen eines Heissschmelzklebstoffes **K** (5)
ii") Applizieren des geschmolzenen Heissschmelzklebstoffes **K** (5) in einen Spalt, welcher seitlich im Wesentlichen durch die Oberflächen des Substrates **S1** (3) und des Substrates **S2** (4) begrenzt ist;
wobei mindestens eines der Substrate **S1** oder **S2** ein Weichmacher enthaltender Kunststoff ist und das Substrat **S1** (3) aus dem gleichen oder einem unterschiedlichen Material wie das Substrat **S2** (4) besteht; **dadurch gekennzeichnet, dass** der Heissschmelzklebstoff **K** (5) mindestens ein bei Raumtemperatur festes, Isocyanatgruppen aufweisendes Polyurethanpolymer **P** und mindestens ein Aldimin **A** enthält.

20. Verfahren gemäss Anspruch 19, **dadurch gekennzeichnet, dass** an Schritt iii) oder v') oder ii") sich ein Schritt des Vernetzens des Heissschmelzklebstoffes **K** (5) durch Reaktion der Isocyanatgruppen mit Wasser, insbesondere in der Form von Luftfeuchtigkeit, anschliesst.

21. Verfahren gemäss Anspruch 19 oder 20, **dadurch gekennzeichnet, dass** der Weichmacher enthaltende Kunststoff in Form einer Folie vorliegt.

22. Verfahren gemäss einem der Ansprüche 19 - 21, **dadurch gekennzeichnet, dass** der Weichmacher enthaltende Kunststoff Weich-Polyvinylchlorid (Weich-PVC) ist.

23. Verfahren gemäss einem der Ansprüche 19 - 22, **dadurch gekennzeichnet, dass** beide Substrate **S1** und **S2** Weich-Polyvinylchlorid (Weich-PVC) sind.

24. Verfahren gemäss einem der Ansprüche 19 - 22, **dadurch gekennzeichnet, dass** eines der beiden Substrate **S1** oder **S2** Weich-Polyvinylchlorid (Weich-PVC) und das andere der beiden Substrate **S2** oder **S1** ein Polycarbonat (PC) oder ein Acrylonitril-Butadien-Styrol-Copolymer (ABS) oder eine PC/ABS-Mischung oder ein PC/ABS-Verbundwerkstoff ist.

25. Verfahren gemäss einem der Ansprüche 19 - 24, **dadurch gekennzeichnet, dass** das bei Raumtemperatur feste, Isocyanatgruppen aufweisende Polyurethanpolymer **P** hergestellt wird aus mindestens einem Polyisocyanat und mindestens einem Polyol, insbesondere einem bei Raumtemperatur festen Polyol, bevorzugt einem bei Raumtemperatur festen Polyesterpolyol.

26. Verfahren gemäss einem der Ansprüche 19 - 25, **dadurch gekennzeichnet, dass** das Aldimin **A** die Formel (I-A) aufweist 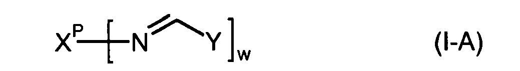
wobei X^{P} für ein Polyamin mit w primären Aminogruppen nach Entfernung von w primären Aminogruppen steht;
w für eine ganze Zahl von 2 - 8, insbesondere von 2 - 4, bevorzugt für 2 oder 3, steht
und Y für den Rest der Formel (Ia) oder (Ib) steht 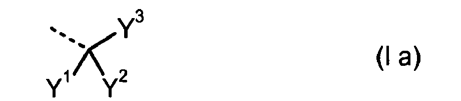 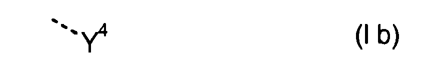 wobei
Y¹ und Y² entweder
unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen ist, stehen;
Y³ für einen einwertigen Kohlenwasserstoffrest, welcher gegebenenfalls mindestens ein Heteroatom, insbesondere Sauerstoff in Form von Ether-, Carbonyl- oder Ester-Gruppen, aufweist, steht; und
Y⁴ entweder
für eine substituierte oder unsubstituierte Aryl- oder Heteroaryl-Gruppe, welche eine Ringgrösse von 5 bis 8, bevorzugt 6, Atomen aufweist, steht,
oder für 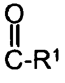 steht, wobei R¹ für ein Wasserstoffatom oder für eine Alkoxygruppe steht,
oder für eine substituierte oder unsubstituierte Alkenyl- oder Arylalkenylgruppe mit 1 - 30 C-Atomen steht.

27. Verfahren gemäss Anspruch 26, **dadurch gekennzeichnet, dass** das sich vom Rest X^{P} ableitende Polyamin ausgewählt ist aus der Gruppe bestehend aus 1,6-Hexamethylendiamin, 1,5-Diamino-2-methylpentan (MPMD), 1,3-Diaminopentan (DAMP), 1-Amino-3-aminomethyl-3,5,5-trimethylcyclohexan (= Isophorondiamin oder IPDA), 2,2,4- und 2,4,4-Trimethylhexamethylendiamin, 4-Aminomethyl-1,8-octandiamin, 1,3- und 1,4-Xylylendiamin, 1,3- und 1,4-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]decan, 1,2-, 1,3- und 1,4-Diaminocyclohexan, Polyoxyalkylen-Diaminen und -Triaminen, sowie Mischungen von zwei oder mehr der vorgenannten Polyamine.

28. Verfahren gemäss einem der Ansprüche 19 - 25, **dadurch gekennzeichnet, dass** das Aldimin **A** die Formel (I-B) aufweist, 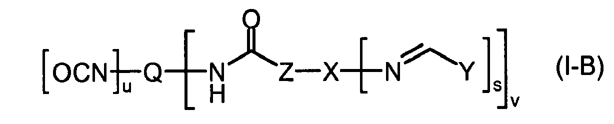 wobei
Q für den Rest eines (u+v) endständige Isocyanatgruppen aufweisenden Polyisocyanats nach Entfernung aller Isocyanatgruppen steht;
u für 0 oder 1 oder 2 steht;
v für 1 oder 2 oder 3 steht;
s für 1 oder 2, bevorzugt 1, steht;
Y für den Rest der Formel (Ia) oder (Ib) steht, 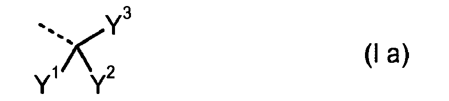 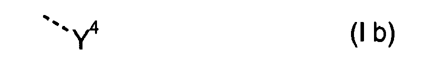 wobei
Y¹ und Y² entweder
unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 20 C-Atomen, der Teil eines, gegebenenfalls substituierten, carbocyclischen Rings mit 5 bis 8, bevorzugt 6, C-Atomen ist, stehen; Y³ für einen einwertigen Kohlenwasserstoffrest, welcher gegebenenfalls mindestens ein Heteroatom, insbesondere Sauerstoff in Form von Ether-, Carbonyl- oder Ester-Gruppen, aufweist, steht; und
Y⁴ entweder
für eine substituierte oder unsubstituierte Aryl- oder Heteroaryl-Gruppe, welche eine Ringgrösse von 5 bis 8, bevorzugt 6, Atomen aufweist, steht,
oder für 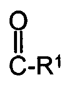 steht, wobei R¹ für ein Wasserstoffatom oder für eine Alkoxygruppe steht,
oder für eine substituierte oder unsubstituierte Alkenyl- oder Arylalkenylgruppe mit 1 - 30 C-Atomen steht;
und
X entweder
für einen (s+1)-wertigen, gegebenenfalls Heteroatome aufweisenden, Kohlenwasserstoffrest mit bevorzugt 2 bis 20 C-Atomen steht, oder, falls Z für N-R⁷ steht, zusammen mit R⁷ für einen (s+2)-wertigen Kohlenwasserstoffrest mit bevorzugt 3 bis 20 C-Atomen, welcher gegebenenfalls mindestens ein Heteroatom, insbesondere in Form von Ether-Sauerstoff oder tertiärem Amin-Stickstoff, enthält, steht;
Z für O, S, NH, NR² oder NR⁷ steht,
wobei R²
entweder
für einen einwertigen Kohlenwasserstoffrest mit 1 bis 20 C-Atomen, welcher gegebenenfalls mindestens eine Carbonsäureester-, Nitril-, Nitro-, Phosphonsäureester-, Sulfon- oder Sulfonsäureestergruppe aufweist, steht,
oder
für einen Substituenten der Formel (X) steht, 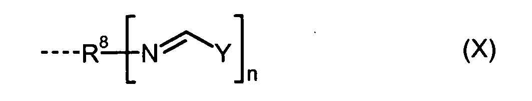 wobei
n für 1 oder 2 steht,
R⁸ für einen (n+1)-wertigen Kohlenwasserstoffrest, welcher gegebenenfalls Heteroatome, insbesondere in Form von Ether-Sauerstoff oder tertiärem Amin-Stickstoff, und gegebenenfalls aktiven Wasserstoff in Form von Hydroxylgruppen, sekundären Aminogruppen oder Mercaptogruppen enthält, steht; und
R⁷ zusammen mit X für einen (s+2)-wertigen Kohlenwasserstoffrest mit bevorzugt 3 bis 20 C-Atomen, welcher gegebenenfalls mindestens ein Heteroatom, insbesondere in Form von Ether-Sauerstoff oder tertiärem Amin-Stickstoff, enthält, steht;
mit der Massgabe, dass u+(v*s) für einen Wert von 2 ≥ steht.

29. Verfahren gemäss Anspruch 28, **dadurch gekennzeichnet, dass** Q für ein (u+v) endständige Isocyanatgruppen aufweisendes Polyurethanpolymer **PUP** nach Entfernung aller Isocyanatgruppen steht, welches insbesondere erhältlich ist aus der Umsetzung von mindestens einem Polyol mit mindestens einem Polyisocyanat, vorzugsweise aus mindestens einem Diol und mindestens einem Diisocyanat.

30. Verfahren gemäss Anspruch 29, **dadurch gekennzeichnet, dass** das Polyurethanpolymer **PUP** ein bei Raumtemperatur festes, Isocyanatgruppen aufweisendes Polyurethanpolymer **PUP1** ist.

31. Verfahren gemäss einem der Ansprüche 28 - 30, **dadurch gekennzeichnet, dass** das sich vom Rest X ableitende Amin ausgewählt ist aus der Gruppe bestehend aus N-Methyl-1,2-ethandiamin, N-Ethyl-1,2-ethandiamin, N-Cyclohexyl-1,2-ethandiamin, N-Methyl-1,3-propandiamin, N-Ethyl-1,3-propandiamin, N-Butyl-1,3-propandiamin, N-Cyclohexyl-1,3-propandiamin, 4-Aminomethyl-piperidin, 3-(4-Aminobutyl)-piperidin, Diethylentriamin (DETA), Bis-hexamethylentriamin (BHMT), Dipropylentriamin (DPTA), Fettdiaminen, wie N-Cocoalkyl-1,3-propandiamin, N-Oleyl-1,3-propandiamin, N-Soyaalkyl-1,3-propandiamin und N-Talgalkyl-1,3-propandiamin; 5-Amino-1-pentanol, 6-Amino-1-hexanol, 4-(2-Aminoethyl)-2-hydroxyethylbenzol, 3-Aminomethyl-3,5,5-trimethylcyclohexanol, 2-(2-Aminoethoxy)-ethanol, Triethylenglykol-monoamin, 3-(2-Hydroxyethoxy)-propylamin, 3-(2-(2-Hydroxyethoxy)-ethoxy)-propylamin und 3-(6-Hydroxyhexyloxy)-propylamin.

32. Verfahren gemäss einem der Ansprüche 28 - 30, **dadurch gekennzeichnet, dass** Z für NH steht und X für den Rest eines asymmetrischen Diamins mit zwei primären Aminogruppen nach Entfernung dieser zwei Aminogruppen steht.

33. Verfahren gemäss Anspruch 32, **dadurch gekennzeichnet, dass** das asymmetrische Diamin ausgewählt ist aus der Gruppe bestehend aus 1,2-Propandiamin, 2-Methyl-1,2-propandiamin, 1,3-Butandiamin, 1,3-Diaminopentan (DAMP), 2,2,4-Trimethylhexamethylendiamin (TMD), 1,5-Diamino-2-butyl-2-ethyl-pentan, 1-Amino-3-aminomethyl-3,5,5-trimethylcyclohexan (= Isophorondiamin oder IPDA) und 1,4-Diamino-2,2,6-trimethylcyclohexan (TMCDA).

34. Verfahren gemäss einem der Ansprüche 26 - 33, **dadurch gekennzeichnet, dass** Y für den Rest der Formel (Ia) steht.

35. Verfahren gemäss einem der Ansprüche 26 - 34, **dadurch gekennzeichnet, dass** Y¹ und Y² jeweils für Methyl stehen.

36. Verfahren gemäss einem der Ansprüche 26 - 35, **dadurch gekennzeichnet, dass** Y³ für einen Rest der Formel (II) oder (III), bevorzugt für einen Rest der Formel (III), steht, 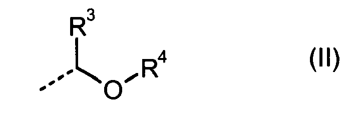 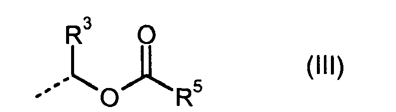
wobei R³ für ein Wasserstoffatom oder für eine Alkyl- oder Arylalkylgruppe, bevorzugt für ein Wasserstoffatom, steht;
R⁴ für einen Kohlenwasserstoffrest mit 1 bis 30, insbesondere 11 bis 30, C-Atomen, der gegebenenfalls Heteroatome enthält, steht; und
R⁵ entweder
für ein Wasserstoffatom steht,
oder
für einen linearen oder verzweigten Alkylrest mit 1 bis 30, insbesondere 11 bis 30, C-Atomen, gegebenenfalls mit cyclischen Anteilen und gegebenenfalls mit mindestens einem Heteroatom, steht,
oder
für einen einfach oder mehrfach ungesättigten, linearen oder verzweigten Kohlenwasserstoffrest mit 5 bis 30 C-Atomen steht,
oder
für einen, gegebenenfalls substituierten, aromatischen oder heteroaromatischen 5- oder 6-gliedrigen Ring steht.

37. Verfahren gemäss einem der Ansprüche 19 - 36, **dadurch gekennzeichnet, dass** der Heissschmelzklebstoff **K** (5) im Wesentlichen frei ist von Weichmachern.

38. Artikel, **dadurch gekennzeichnet, dass** er erhalten wird durch ein Verfahren gemäss einem der Ansprüche 19 - 37.

39. Artikel gemäss Anspruch 38, **dadurch gekennzeichnet, dass** der Artikel ein mit Weich-PVC-Folie kaschierter Träger ist.

## Claims

1. Laminate (1) having
a) at least one substrate **S1** (3);
b) at least one hot-melt adhesive **K** (5);
c) at least one substrate **S2** (4),
the substrate **S1** and/or the substrate **S2** being a plasticizer-containing plastic,
the substrate **S1** and/or the substrate **S2** optinally having been pretreated by a primer; and
the substrate **S1** being joined to the substrate **S2** via the hot-melt adhesive **K; characterized in that** the hot-melt adhesive **K** (5) comprises at least one polyurethane polymer **P** which contains isocyanate groups and is solid at room temperature, and at least one aldimine **A**.

2. Laminate (1) according to Claim 1, **characterized in that** the substrate **S1** (3) and/or the substrate **S2** (4) is plasticized polyvinyl chloride (pPVC).

3. Laminate (1) according to Claim 1 or 2, **characterized in that** the substrate **S1** (3) and/or the substrate **S2** (4) is a polycarbonate (PC) or an acrylonitrile-butadiene-styrene copolymer (ABS) or a PC/ABS blend or a PC/ABS composite.

4. Laminate (1) according to any one of the preceding claims, **characterized in that** the polyurethane polymer **P** which contains isocyanate groups and is solid at room temperature is prepared from at least one polyisocyanate and at least one polyol, more particularly a polyol which is solid at room temperature, preferably a polyester polyol which is solid at room temperature.

5. Laminate (1) according to any one of the preceding claims, **characterized in that** the aldimine **A** has the formula (I-A) 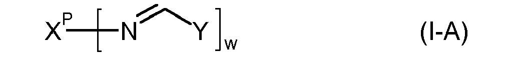
where X^{P} is a polyamine having w primary amino groups following removal of w primary amino groups,
w is an integer 2 - 8, more particularly 2 - 4, preferably 2 or 3,
and Y is a radical of the formula (I a) or (I b) 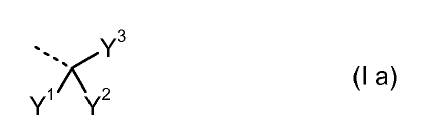 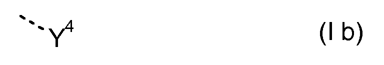 where
Y¹ and Y² either
independently of one another are each a monovalent hydrocarbon radical having 1 to 12 C atoms,
or together are a divalent hydrocarbon radical having 4 to 20 C atoms which is part of an unsubstituted or substituted carbocyclic ring having 5 to 8, preferably 6, C atoms;
Y³ is a monovalent hydrocarbon radical which where appropriate has at least one heteroatom, more particularly oxygen in the form of ether, carbonyl or ester groups; and
Y⁴ either
is a substituted or unsubstituted aryl or heteroaryl group which has a ring size of 5 to 8, preferably 6, atoms,
or is 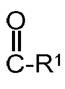 where R¹ is a hydrogen atom or an alkoxy group, or is a substituted or unsubstituted alkenyl or arylalkenyl group having 1 - 30 C atoms.

6. Laminate (1) according to Claim 5, **characterized in that** the polyamine deriving from the radical X^{P} is selected from the group consisting of 1,6-hexamethylenediamine, 1,5-diamino-2-methylpentane (MPMD), 1,3-diaminopentane (DAMP), 1-amino-3-aminomethyl-3,5,5-trimethylcyclohexane (i.e. isophoronediamine or IPDA), 2,2,4- and 2,4,4-trimethylhexamethylenediamine, 4-aminomethyl-1,8-octanediamine, 1,3- and 1,4-xylylenediamine, 1,3- and 1,4-bis(aminomethyl)cyclohexane, bis-(4-aminocyclohexyl)methane, bis-(4-amino-3-methylcyclohexyl)methane, 3(4),8(9)-bis(aminomethyl)tricyclo[5.2.1.0^{2,6}]decane, 1,2-, 1,3- and 1,4-diaminocyclohexane, polyoxyalkylene-diamines and -triamines, and also mixtures of two or more of the aforementioned polyamines.

7. Laminate (1) according to any one of Claims 1 - 4, **characterized in that** the aldimine **A** has the formula (I-B) 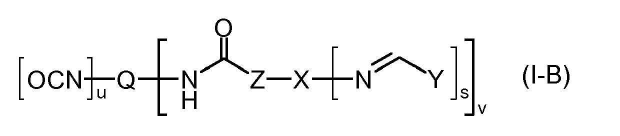 where
Q is the radical of a polyisocyanate containing (u+v) terminal isocyanate groups following removal of all the isocyanate groups;
u is 0 or 1 or 2;
v is 1 or 2 or 3;
s is 1 or 2, preferably 1;
Y is the radical of the formula (I a) or (I b) 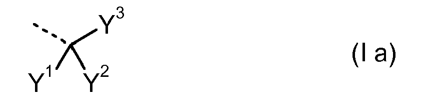 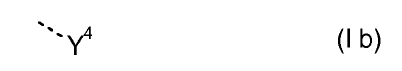 where
Y¹ and Y² either
independently of one another are each a monovalent hydrocarbon radical having 1 to 12 C atoms,
or together are a divalent hydrocarbon radical having 4 to 20 C atoms which is part of an unsubstituted or substituted carbocyclic ring having 5 to 8, preferably 6, C atoms;
Y³ is a monovalent hydrocarbon radical which where appropriate has at least one heteroatom, more particularly oxygen in the form of ether, carbonyl or ester groups; and
Y⁴ either
is a substituted or unsubstituted aryl or heteroaryl group which has a ring size of 5 to 8, preferably 6, atoms,
or is 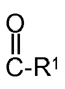 where R¹ is a hydrogen atom or an alkoxy group,
or is a substituted or unsubstituted alkenyl or arylalkenyl group having 1 - 30 C atoms;
and
X either
is an (s+1)-valent hydrocarbon radical having preferably 2 to 20 C atoms and containing heteroatoms where appropriate,
or, if Z is N-R⁷, is together with R⁷ an (s+2)-valent hydrocarbon radical having preferably 3 to 20 C atoms and containing, where appropriate, at least one heteroatom, more particularly in the form of ether oxygen or tertiary amine nitrogen;
Z is O, S, NH, NR² or NR⁷,
where R²
either
is a monovalent hydrocarbon radical having 1 to 20 C atoms which where appropriate has at least one carboxylic ester, nitrile, nitro, phosphonic ester, sulphone or sulphonic ester group,
or
is a substituent of the formula (X) 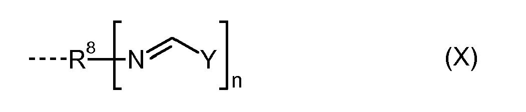 where
n is 1 or 2,
R⁸ is an (n+1)-valent hydrocarbon radical which where appropriate contains heteroatoms, more particularly in the form of ether oxygen or tertiary amine nitrogen, and contains, where appropriate, active hydrogen in the form of hydroxyl groups, secondary amino groups or mercapto groups; and
R⁷ together with X is an (s+2)-valent hydrocarbon radical having preferably 3 to 20 C atoms which contains, where appropriate, at least one heteroatom, more particularly in the form of ether oxygen or tertiary amine nitrogen;
with the proviso that u+(v*s) has a value of 2 ≥.

8. Laminate (1) according to Claim 7, **characterized in that** Q is a polyurethane polymer **PUP** containing (u+v) terminal isocyanate groups following removal of all of the isocyanate groups and is obtainable more particularly from the reaction of at least one polyol with at least one polyisocyanate, preferably of at least one diol and at least one diisocyanate.

9. Laminate (1) according to Claim 8, **characterized in that** the polyurethane polymer **PUP** containing (u+v) terminal isocyanate groups is a polyurethane polymer **PUP1** which contains isocyanate groups and is solid at room temperature.

10. Laminate (1) according to any one of Claims 7 - 9, **characterized in that** the amine deriving from the radical X is selected from the group consisting of N-methyl-1,2-ethanediamine, N-ethyl-1,2-ethanediamine, N-cyclohexyl-1,2-ethanediamine, N-methyl-1,3-propanedia mine, N-ethyl-1,3-propanediamine, N-butyl-1,3-propanediamine, N-cyclohexyl-1,3-propanediamine, 4-aminomethyl-piperidine, 3-(4-aminobutyl)piperidine, diethylenetriamine (DETA), bishexamethylenetriamine (BHMT), dipropylenetriamine (DPTA), fatty diamines, such as N-cocoalkyl-1,3-propanediamine, N-oleyl-1,3-propanediamine, N-soyaalkyl-1,3-propanediamine and N-tallowalkyl-1,3-propanediamine; 5-amino-1-pentanol, 6-amino-1-hexanol, 4-(2-aminoethyl)-2-hydroxyethylbenzene, 3-aminomethyl-3,5,5-trimethyl-cyclohexanol, 2-(2-aminoethoxy)ethanol, triethylene glycol monoamine, 3-(2-hydroxyethoxy)propylamine, 3-(2-(2-hydroxyethoxy)ethoxy)propylamine and 3-(6-hydroxyhexyloxy)propylamine.

11. Laminate (1) according to any one of Claims 7 - 9, **characterized in that** Z is NH and X is the radical of an asymmetric diamine having two primary amino groups following removal of these two amino groups.

12. Laminate (1) according to Claim 11, **characterized in that** the asymmetric diamine is selected from the group consisting of 1 ,2-propanediamine, 2-methyl-1,2-propanediamine, 1,3-butanediamine, 1,3-diaminopentane (DAMP), 2,2,4-trimethylhexamethylenediamine (TMD), 1,5-diamino-2-butyl-2-ethyl-pentane, 1-amino-3-aminomethyl-3,5,5-trimethylcyclohexane (i.e. isophoronediamine or IPDA) and 1,4-diamino-2,2,6-trimethylcyclohexane (TMCDA).

13. Laminate (1) according to any one of Claims 5 - 12, **characterized in that** Y is the radical of the formula (I a).

14. Laminate (1) according to any one of Claims 5 - 13, **characterized in that** Y¹ and Y² are each methyl.

15. Laminate (1) according to any one of Claims 5 - 14, **characterized in that** Y³ is a radical of the formula (II) or (III), preferably a radical of the formula (III) 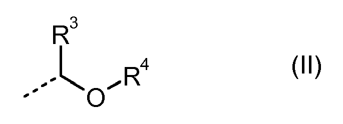 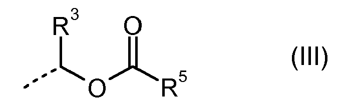
where R³ is a hydrogen atom or is an alkyl or arylalkyl group preferably a hydrogen atom;
R⁴ is a hydrocarbon radical having 1 to 30, more particularly 11 to 30, C atoms which where appropriate contains heteroatoms; and
R⁵ either
is a hydrogen atom
or
is a linear or branched alkyl radical having 1 to 30, more particularly 11 to 30, C atoms, where appropriate with cyclic fractions and where appropriate with at least one heteroatom,
or
is a singly or multiply unsaturated, linear or branched hydrocarbon radical having 5 to 30 C atoms
or
is an unsubstituted or substituted, aromatic or heteroaromatic 5- or 6-membered ring.

16. Laminate (1) according to any one of the preceding claims, **characterized in that** the hot-melt adhesive **K** (5) is substantially free from plasticizers.

17. Laminate (1) according to any one of the preceding claims, **characterized in that** the hot-melt adhesive **K** (5) has been crosslinked under the influence of water, more particularly in the form of atmospheric moisture.

18. Coated polymeric film (2) **characterized in that** it is obtained by applying a hot-melt adhesive **K** (5) as described in a laminate according to any one of Claims 1 to 17 in a melted state to a film of a plasticizer-containing plastic, more particularly to a pPVC film.

19. Process for the adhesive bonding of a plasticizer-containing plastic, comprising the steps of
i) melting a hot-melt adhesive **K** (5)
ii) applying the melted hot-melt adhesive **K** (5) to a substrate **S1** (3)
iii) contacting the surface of a substrate **S2** (4) with the hot-melt adhesive **K** (5) within its open time;
or
i') melting a hot-melt adhesive **K** (5)
ii') applying the melted hot-melt adhesive **K** (5) to a substrate **S1** (3)
iii') cooling the hot-melt adhesive **K** (5) to room temperature
iv') melting the hot-melt adhesive **K** (5) located on the substrate **S1** (3)
v') contacting the surface of a substrate **S2** (4) with the hot-melt adhesive **K** (5);
or
i") melting a hot-melt adhesive **K** (5)
ii") applying the melted hot-melt adhesive **K** (5) into a gap confined laterally substantially by the surfaces of the substrate **S1** (3) and the substrate **S2** (4);
at least one of the substrates **S1** or **S2,** being a plasticizer-containing plastic and the substrate **S1** (3) being composed of the same material as or a different material to the substrate **S2** (4);
**characterized in that** the hot-melt adhesive **K** (5) comprises at least one aldimine **A** and at least one polyurethane polymer **P** which contains isocyanate groups and is solid at room temperature.

20. Process according to Claim 19, **characterized in that** step iii) or v') or ii") is followed by a step of crosslinking the hot-melt adhesive **K** (5) by reacting the isocyanate groups with water, more particularly in the form of atmospheric moisture.

21. Process according to Claim 19 or 20, **characterized in that** the plasticizer-containing plastic is in the form of a film.

22. Process according to any one of Claims 19 - 21, **characterized in that** the plasticizer-containing plastic is plasticized polyvinyl chloride (pPVC).

23. Process according to any one of Claims 19 - 22, **characterized in that** both substrates, **S1** and **S2,** are plasticized polyvinyl chloride (pPVC).

24. Process according to any one of Claims 19 - 22, **characterized in that** one of the two substrates, **S1** or **S2,** is plasticized polyvinyl chloride (pPVC) and the other of the two substrates, **S2** or **S1,** is a polycarbonate (PC) or an acrylonitrile-butadiene-styrene copolymer (ABS) or a PC/ABS blend or a PC/ABS composite.

25. Process according to any one of Claims 19-24, **characterized in that** the polyurethane polymer **P** which contains isocyanate groups and is solid at room temperature is prepared from at least one polyisocyanate and at least one polyol, more particularly a polyol which is solid at room temperature, preferably a polyester polyol which is solid at room temperature.

26. Process according to any one of Claims 19 - 25, **characterized in that** the aldimine **A** has the formula (I-A) 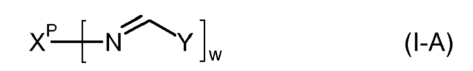
where X^{P} is a polyamine having w primary amino groups following removal of w primary amino groups,
w is an integer 2 - 8, more particularly 2 - 4, preferably 2 or 3,
and Y is a radical of the formula (I a) or (I b) 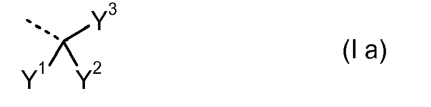 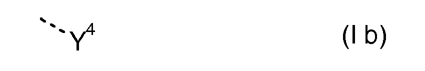 where
Y¹ and Y² either
independently of one another are each a monovalent hydrocarbon radical having 1 to 12 C atoms,
or together are a divalent hydrocarbon radical having 4 to 20 C atoms which is part of an unsubstituted or substituted carbocyclic ring having 5 to 8, preferably 6, C atoms;
Y³ is a monovalent hydrocarbon radical which where appropriate has at least one heteroatom, more particularly oxygen in the form of ether, carbonyl or ester groups; and
Y⁴ either
is a substituted or unsubstituted aryl or heteroaryl group which has a ring size of 5 to 8, preferably 6, atoms,
or is 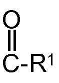 where R¹ is a hydrogen atom or an alkoxy group,
or is a substituted or unsubstituted alkenyl or arylalkenyl group having 1 - 30 C atoms.

27. Process according to Claim 26, **characterized in that** the polyamine deriving from the radical X^{P} is selected from the group consisting of 1,6-hexamethylenediamine, 1,5-diamino-2-methylpentane (MPMD), 1,3-diaminopentane (DAMP), 1-amino-3-aminomethyl-3,5,5-trimethylcyclohexane (i.e. isophoronediamine or IPDA), 2,2,4- and 2,4,4-trimethylhexamethylenediamine, 4-aminomethyl-1,8-octanediamine, 1,3- and 1,4-xylylenediamine, 1,3- and 1,4-bis(aminomethyl)cyclohexane, bis-(4-aminocyclohexyl)methane, bis-(4-amino-3-methylcyclohexyl)methane, 3(4),8(9)-bis(aminomethyl)tricyclo[5.2.1.0^{2,6}]decane, 1,2-, 1,3- and 1,4-diaminocyclohexane, polyoxyalkylene-diamines and -triamines, and also mixtures of two or more of the aforementioned polyamines.

28. Process according to any one of Claims 19 - 25, **characterized in that** the aldimine **A** has the formula (I-B) 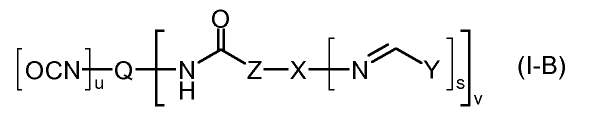 where
Q is the radical of a polyisocyanate containing (u+v) terminal isocyanate groups following removal of all the isocyanate groups;
u is 0 or 1 or 2;
v is 1 or 2 or 3;
s is 1 or 2, preferably 1;
Y is the radical of the formula (I a) or (I b) 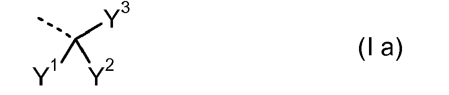 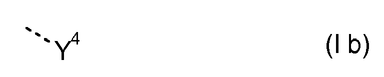 where
Y¹ and Y² either independently of one another are each a monovalent hydrocarbon radical having 1 to 12 C atoms,
or together are a divalent hydrocarbon radical having 4 to 20 C atoms which is part of an unsubstituted or substituted carbocyclic ring having 5 to 8, preferably 6, C atoms;
Y³ is a monovalent hydrocarbon radical which where appropriate has at least one heteroatom, more particularly oxygen in the form of ether, carbonyl or ester groups; and
Y⁴ either
is a substituted or unsubstituted aryl or heteroaryl group which has a ring size of 5 to 8, preferably 6, atoms,
or is 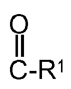 where R¹ is a hydrogen atom or an alkoxy group,
or is a substituted or unsubstituted alkenyl or arylalkenyl group having 1 - 30 C atoms;
and
X either
is an (s+1)-valent hydrocarbon radical having preferably 2 to 20 C atoms and containing heteroatoms where appropriate,
or, if Z is N-R⁷, is together with R⁷ an (s+2)-valent hydrocarbon radical having preferably 3 to 20 C atoms and containing, where appropriate, at least one heteroatom, more particularly in the form of ether oxygen or tertiary amine nitrogen;
Z is O, S, NH, NR² or NR⁷,
where R²
either
is a monovalent hydrocarbon radical having 1 to 20 C atoms which where appropriate has at least one carboxylic ester, nitrile, nitro, phosphonic ester, sulphone or sulphonic ester group,
or
is a substituent of the formula (X) 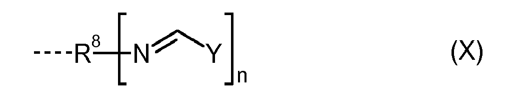 where
n is 1 or 2,
R⁸ is an (n+1)-valent hydrocarbon radical which where appropriate contains heteroatoms, more particularly in the form of ether oxygen or tertiary amine nitrogen, and contains, where appropriate, active hydrogen in the form of hydroxyl groups, secondary amino groups or mercapto groups; and
R⁷ together with X is an (s+2)-valent hydrocarbon radical having preferably 3 to 20 C atoms which contains, where appropriate, at least one heteroatom, more particularly in the form of ether oxygen or tertiary amine nitrogen;
with the proviso that u+(v*s) has a value of 2 ≥.

29. Process according to Claim 28, **characterized in that** Q is a polyurethane polymer **PUP** containing (u+v) terminal isocyanate groups following removal of all of the isocyanate groups and is obtainable more particularly from the reaction of at least one polyol with at least one polyisocyanate, preferably of at least one diol and at least one diisocyanate.

30. Process according to Claim 29, **characterized in that** the polyurethane polymer **PUP** is a polyurethane polymer **PUP1** which contains isocyanate groups and is solid at room temperature.

31. Process according to any one of Claims 28 - 30, **characterized in that** the amine deriving from the radical X is selected from the group consisting of N-methyl-1,2-ethanediamine, N-ethyl-1,2-ethanediamine, N-cyclohexyl-1,2-ethanediamine, N-methyl-1,3-propanedia mine, N-ethyl-1,3-propanediamine, N-butyl-1,3-propanediamine, N-cyclohexyl-1,3-propanediamine, 4-aminomethyl-piperidine, 3-(4-aminobutyl)piperidine, diethylenetriamine (DETA), bishexamethylenetriamine (BHMT), dipropylenetriamine (DPTA), fatty diamines, such as N-cocoalkyl-1,3-propanediamine, N-oleyl-1,3-propanediamine, N-soyaalkyl-1,3-propanediamine and N-tallowalkyl-1,3-propanediamine; 5-amino-1-pentanol, 6-amino-1-hexanol, 4-(2-aminoethyl)-2-hydroxyethylbenzene, 3-aminomethyl-3,5,5-trimethyl-cyclohexanol, 2-(2-aminoethoxy)ethanol, triethylene glycol monoamine, 3-(2-hydroxyethoxy)propylamine, 3-(2-(2-hydroxyethoxy)ethoxy)propylamine and 3-(6-hydroxyhexyloxy)propylamine.

32. Process according to any one of Claims 28 - 30, **characterized in that** Z is NH and X is the radical of an asymmetric diamine having two primary amino groups following removal of these two amino groups.

33. Process according to Claim 32, **characterized in that** the asymmetric diamine is selected from the group consisting of 1,2-propanediamine, 2-methyl-1,2-propanediamine, 1,3-butanediamine, 1,3-diaminopentane (DAMP), 2,2,4-trimethylhexamethylenediamine (TMD), 1,5-diamino-2-butyl-2-ethyl-pentane, 1-amino-3-aminomethyl-3,5,5-trimethylcyclohexane (i.e. isophoronediamine or IPDA) and 1,4-diamino-2,2,6-trimethylcyclohexane (TMCDA).

34. Process according to any one of Claims 26 - 33, **characterized in that** Y is the radical of the formula (I a).

35. Process according to any one of Claims 26 - 34, **characterized in that** Y¹ and Y² are each methyl.

36. Process according to any one of Claims 26 - 35, **characterized in that** Y³ is a radical of the formula (II) or (III), preferably a radical of the formula (III) 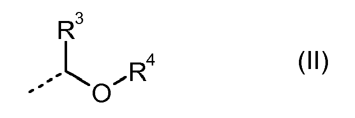 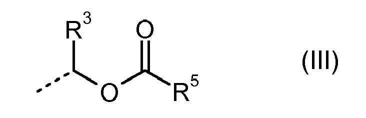
where R³ is a hydrogen atom or is an alkyl or arylalkyl group preferably a hydrogen atom;
R⁴ is a hydrocarbon radical having 1 to 30, more particularly 11 to 30, C atoms which where appropriate contains heteroatoms; and
R⁵ either
is a hydrogen atom
or
is a linear or branched alkyl radical having 1 to 30, more particularly 11 to 30, C atoms, where appropriate with cyclic fractions and where appropriate with at least one heteroatom,
or
is a singly or multiply unsaturated, linear or branched hydrocarbon radical having 5 to 30 C atoms
or
is an unsubstituted or substituted, aromatic or heteroaromatic 5- or 6-membered ring.

37. Process according to any one of Claims 19 - 36, **characterized in that** the hot-melt adhesive **K** (5) is substantially free from plasticizers.

38. Article **characterized in that** it is obtained by a process according to any one of Claims 19 - 37.

39. Article according to Claim 38, **characterized in that** the article is a support laminated with pPVC film.

## Revendications

1. Corps composite à couches (1) présentant
a) au moins un substrat **S1** (3) ;
b) au moins un adhésif thermofusible **K** (5) ;
c) au moins un substrat **S2** (4),
où
- le substrat **S1** et/ou le substrat **S2** est un matériau synthétique contenant un plastifiant,
- le substrat **S1** et/ou le substrat **S2** est le cas échéant prétraité avec un apprêt ; et
- le substrat **S1** est assemblé avec le substrat **S2** via l'adhésif thermofusible **K,**
**caractérisé en ce que** l'adhésif thermofusible **K** (5) comprend au moins un polymère de polyuréthane **P** solide à température ambiante, présentant des groupes isocyanate et au moins une aldimine **A.**

2. Corps composite à couches (1) selon la revendication 1, **caractérisé en ce que** le substrat S1 (3) et/ou le substrat **S2** (4) est un poly(chlorure de vinyle) souple (PVC souple).

3. Corps composite à couches (1) selon la revendication 1 ou 2, **caractérisé en ce que** le substrat **S1** (3) et/ou le substrat **S2** (4) est un polycarbonate (PC) ou un copolymère d'acrylonitrile-butadiène-styrène (ABS) ou un mélange PC/ABS ou un matériau composite PC/ABS.

4. Corps composite à couches (1) selon l'une quelconque des revendications précédentes, **caractérisé en ce que** le polymère de polyuréthane **P** solide à température ambiante, présentant des groupes isocyanate est préparé à partir d'au moins un polyisocyanate et d'au moins un polyol, en particulier un polyol solide à température ambiante, de préférence un polyester-polyol solide à température ambiante.

5. Corps composite à couches (1) selon l'une quelconque des revendications précédentes, **caractérisé en ce que** l'aldimine **A** présente la formule (I-A) 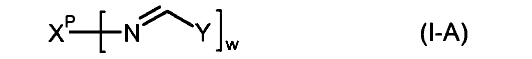 où
X^{P} représente une polyamine avec w groupes amino primaires après élimination de w groupes amino primaires ;
w représente un nombre entier de 2-8, en particulier de 2-4, de préférence 2 ou 3, et
Y représente un radical de formule (I a) ou (I b) 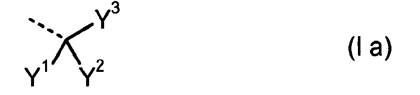 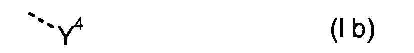 où
Y¹ et représentent soit, indépendamment l'un de l'autre, à chaque fois un radical hydrocarboné monovalent comprenant 1 à 12 atomes de carbone,
Y² soit ensemble un radical hydrocarboné divalent comprenant 4 à 20 atomes de carbone, qui fait partie d'un cycle carbocyclique, le cas échéant substitué, comprenant 5 à 8, de préférence 6, atomes de carbone ;
Y³ représente un radical hydrocarboné monovalent, qui présente le cas échéant au moins un hétéroatome, en particulier d'oxygène sous forme de groupes éther, carbonyle ou ester ; et
Y⁴ représente soit un groupe aryle ou hétéroaryle substitué ou non substitué, qui présente une taille de cycle entre 5 et 8, de préférence 6, atomes, soit 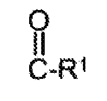 où R¹ représente un atome d'hydrogène ou un groupe alcoxy,
soit un groupe alcényle ou arylalcényle substitué ou non substitué comprenant 1-30 atomes de carbone.

6. Corps composite à couches (1) selon la revendication 5, **caractérisé en ce que** la polyamine dérivée du radical X^{P} est choisie dans le groupe constitué par la 1,6-hexaméthylènediamine, le 1,5-diamino-2-méthylpentane (MPMD), le 1,3-diaminopentane ( DAMP), le 1-amino-3-aminométhyl-3,5,5-triméthylcyclohexane (= isophoronediamine ou IPDA), la 2,2,4-triméthylhexaméthylènediamine et la 2,4,4-triméthylhexaméthylènediamine, la 4-aminométhyl-1,8-octanediamine, la 1, 3-xylylènediamine et la 1, 4-xylylènediamine, le 1,3-bis-(aminométhyl)cyclohexane et le 1,4-bis- (aminométhyl) cyclohexane, le bis- (4-aminocyclohexyl)-méthane, le bis-(4-amino-3-méthylcyclohexyl)-méthane, le 3(4),8(9)-bis-(aminométhyl)-tricyclo[5,2,1,0^{2,6}] décane, le 1,2-diaminocyclohexane, le 1,3-diaminocyclohexane et le 1,4-diaminocyclohexane, les polyoxyalkylène-diamines et les polyoxyalkylène-triamines, ainsi que les mélanges de deux des polyamines susmentionnées ou plus.

7. Corps composite à couches (1) selon l'une quelconque des revendications 1-4, **caractérisé en ce que** l'aldimine A présente la formule (I-B) 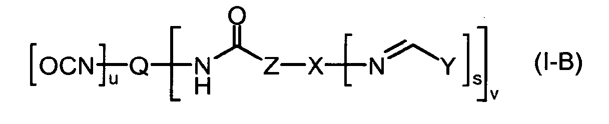 où
Q représente un radical d'un polyisocyanate présentant (u + v) groupes isocyanate en position terminale, après élimination de tous les groupes isocyanate ;
u représente 0 ou 1 ou 2 ;
v représente 1 ou 2 ou 3 ;
s représente 1 ou 2, de préférence 1,
Y représente le radical de formule (I a) ou (I b) 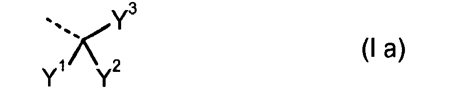 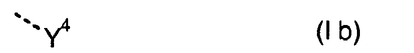 où
Y¹ et représentent soit, indépendamment l'un de l'autre, à chaque fois un radical hydrocarboné monovalent comprenant 1 à 12 atomes de carbone,
Y² soit ensemble un radical hydrocarboné divalent comprenant 4 à 20 atomes de carbone, qui fait partie d'un cycle carbocyclique, le cas échéant substitué, comprenant 5 à 8, de préférence 6, atomes de carbone ;
Y³ représente un radical hydrocarboné monovalent, qui présente le cas échéant au moins un hétéroatome, en particulier d'oxygène sous forme de groupes éther, carbonyle ou ester ; et
Y⁴ représente soit un groupe aryle ou hétéroaryle substitué ou non substitué, qui présente une taille de cycle entre 5 et 8, de préférence 6, atomes,
soit 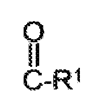 où R¹ représente un atome d'hydrogène ou un groupe alcoxy,
soit un groupe alcényle ou arylalcényle substitué ou non substitué comprenant 1-30 atomes de carboné :
et
X représente soit un radical hydrocarboné (s + 1)- valent, présentant le cas échéant des hétéroatomes, comprenant de préférence 2 à 20 atomes de carbone,
soit, lorsque Z représente N-R⁷, ensemble avec R⁷ un radical hydrocarboné (s + 2)-valent comprenant de préférence 3 à 20 atomes de carbone, qui contient le cas échéant au moins un hétéroatome, en particulier sous forme d'oxygène de fonction éther ou d'azote de fonction amine tertiaire ;
Z représente O, S, NH, NR² ou NR⁷,
où
R² représente soit un radical hydrocarboné monovalent comprenant 1 à 20 atomes de carbone, qui présente le cas échéant au moins un groupe ester d'acide carboxylique, nitrile, nitro, ester d'acide phosphonique, sulfone ou ester d'acide sulfonique,
soit un substituant de formule (X), 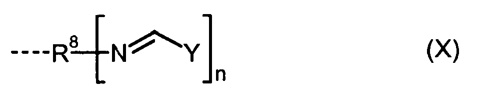 où
n représente 1 ou 2,
R⁸ représente un radical hydrocarboné (n + 1)- valent, qui contient le cas échéant des hétéroatomes, en particulier sous forme d'oxygène de fonction éther ou d'azote de fonction amine tertiaire, et le cas échéant de l'hydrogène actif sous forme de groupes hydroxyle, amino secondaire ou mercapto ;et
R⁷ représente ensemble avec X un radical hydrocarboné (s + 2)-valent comprenant de préférence 3 à 20 atomes de carbone, qui contient le cas échéant au moins un hétéroatome, en particulier sous forme d'oxygène de fonction éther ou d'azote de fonction amine tertiaire ;
à condition que u + (v * s) représente une valeur de 2 ≥.

8. Corps composite à couches (1) selon la revendication 7, **caractérisé en ce que** Q représente un polymère de polyuréthane **PUP** présentant (u + v) groupes isocyanate en position terminale, après élimination de tous les groupes isocyanate, qui peut en particulier être obtenu par transformation d'au moins un polyol avec au moins un polyisocyanate, de préférence d'au moins un diol avec au moins un diisocyanate.

9. Corps composite à couches (1) selon la revendication 8, **caractérisé en ce que** le polymère de polyuréthane **PUP** présentant (u + v) groupes isocyanate en position terminale est un polymère de polyuréthane **PUP1** solide à température ambiante, présentant des groupes isocyanate.

10. Corps composite à couches (1) selon l'une quelconque des revendications 7-9, **caractérisé en ce que** l'amine dérivée du radical X est choisie dans le groupe constitué par la N-méthyl-1,2-éthanediamine, la N-éthyl-1,2-éthanediamine, la N-cyclohexyl-1,2-éthanediamine, la N-méthyl-1,3-propanediamine, la N-éthyl-1,3-propanediamine, la N-butyl-1,3-propanediamine, la N-cyclohexyl-l,3-propanediamine, la 4-aminométhylpipéridine, la 3-(4-aminobutyl)-pipéridine, la diéthylènetriamine (DETA), la bishexaméthylènetriamine (BHMT), la dipropylènetriamine (DPTA), les diamines grasses telles que la N-alkyl-1,3-propanediamine de coco, la N-oléyl-1,3-propanediamine, la N-alkyl-1,3-propanediamine de soja et la N-alkyl-1,3-propanediamine de suif ; le 5-amino-1-pentanol, le 6-amino-1-hexanol, le 4-(2-aminoéthyl)-2-hydroxyéthylbenzène, le 3-aminométhyl-3,5,5-triméthylcyclohexanol, le 2-(2-aminoéthoxy)-éthanol, la triéthylèneglycolmonoamine, la 3-(2-hydroxyéthoxy)-propylamine, 1 a 3-(2-(2-hydroxyéthoxy)-éthoxy)-propylamine et la 3-(6-hydroxyhexyloxy)-propylamine.

11. Corps composite à couches (1) selon l'une quelconque des revendications 7-9, **caractérisé en ce que** Z représente NH et X représente le radical d'une diamine asymétrique comprenant deux groupes amino primaires après l'élimination de ces deux groupes amino.

12. Corps composite à couches (1) selon la revendication 11, **caractérisé en ce que** la diamine asymétrique est choisie dans le groupe constitué par la 1,2-propanediamine, la 2-méthyl-1,2-propanediamine, la 1,3-butanediamine, le 1,3-diaminopentane (DAMP), la 2,2,4-triméthylhexaméthylènediamine (TMD), le 1,5-diamino-2-butyl-2-éthylpentane, le 1-amino-3-aminométhyl-3,5,5-triméthylcyclohexane (= isophoronediamine ou IPDA) et le 1,4-diamino-2,2,6-triméthylcyclohexane (TMCDA).

13. Corps composite à couches (1) selon l'une quelconque des revendications 5-12, **caractérisé en ce que** Y représente le radical de formule (I a).

14. Corps composite à couches (1) selon l'une quelconque des revendications 5-13, **caractérisé en ce que** Y¹ et Y² représentent à chaque fois méthyle.

15. Corps composite à couches (1) selon l'une quelconque des revendications 5-14, **caractérisé en ce que** Y³ représente un radical de formule (II) ou (III), de préférence un radical de formule (III) 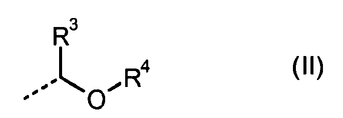 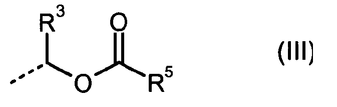 où
R³ représente un atome d'hydrogène ou un groupe alkyle ou arylalkyle, de préférence un atome d'hydrogène ;
R⁴ représente un radical hydrocarboné comprenant 1 à 30, en particulier 11 à 30, atomes de carbone, qui contient le cas échéant des hétéroatomes ;et
R⁵ représente
- soit un atome d'hydrogène,
- soit un radical alkyle linéaire ou ramifié comprenant 1 à 30, en particulier 11 à 30, atomes de carbone, le cas échéant avec des proportions cycliques et le cas échéant au moins un hétéroatome,
- soit un radical hydrocarboné linéaire ou ramifié, monoinsaturé ou polyinsaturé, comprenant 5 à 30 atomes de carbone,
- soit un cycle aromatique ou hétéroaromatique de 5 ou 6 chaînons, le cas échéant substitué.

16. Corps composite à couches (1) selon l'une quelconque des revendications précédentes, **caractérisé en ce que** l'adhésif thermofusible **K** (5) est essentiellement exempt de plastifiants.

17. Corps composite à couches (1) selon l'une quelconque des revendications précédentes, **caractérisé en ce que** l'adhésif thermofusible **K** (5) a été réticulé sous l'influence de l'eau, en particulier sous forme de l'humidité de l'air.

18. Feuille en matériau synthétique revêtue (2), **caractérisée en ce qu'**elle est obtenue par l'application d'un adhésif thermofusible **K** (5), tel qu'il est décrit dans un corps composite à couches selon l'une quelconque des revendications 1 à 17, à l'état fondu sur une feuille en un matériau synthétique contenant un plastifiant, en particulier sur une feuille en PVC souple.

19. Procédé pour le collage d'un matériau synthétique contenant un plastifiant comprenant les étapes
i) fusion d'un adhésif thermofusible **K** (5)
ii) application de l'adhésif thermofusible fondu **K** (5) sur un substrat **S1** (3)
iii) mise en contact de la surface d'un substrat **S2** (4) avec l'adhésif thermofusible **K** (5) pendant son temps ouvert ;
ou
i') fusion d'un adhésif thermofusible **K** (5)
ii') application de l'adhésif thermofusible fondu **K** (5) sur un substrat **S1** (3)
iii') refroidissement de l'adhésif thermofusible **K** (5) à température ambiante
iv') fusion de l'adhésif thermofusible **K** (5) se trouvant sur le substrat **S1** (3)
v') mise en contact de la surface d'un substrat **S2** (4)
avec l'adhésif thermofusible **K** (5) ;
ou
i'') fusion d'un adhésif thermofusible **K** (5)
ii'') application de l'adhésif thermofusible **K** (5) fondu dans une fente qui est délimitée latéralement, essentiellement par les surfaces du substrat **S1** (3) et du substrat **S2** (4) ;
au moins un des substrats **S1** ou **S2** étant un matériau synthétique contenant un plastifiant et le substrat **S1** (3) étant constitué par le même matériau que le substrat **S2** (4) ou par un matériau différent du substrat **S2** (4), **caractérisé en ce que** l'adhésif thermofusible **K** (5) contient au moins un polymère de polyuréthane **P** solide à température ambiante, présentant des groupes isocyanate et au moins une aldimine **A.**

20. Procédé selon la revendication 19, **caractérisé en ce que** l'étape iii) ou v') ou ii") est suivie d'une étape de réticulation de l'adhésif thermofusible **K** (5) par réaction des groupes isocyanate avec de l'eau, en particulier sous forme d'humidité de l'eau.

21. Procédé selon la revendication 19 ou 20, **caractérisé en ce que** le matériau synthétique contenant un plastifiant se trouve sous forme d'une feuille.

22. Procédé selon l'une quelconque des revendications 19 à 21, **caractérisé en ce que** le matériau synthétique contenant un plastifiant est du poly(chlorure de vinyle) souple (PVC souple).

23. Procédé selon l'une quelconque des revendications 19 à 22, **caractérisé en ce que** les deux substrats **S1** et **S2** sont du poly(chlorure de vinyle) souple (PVC souple).

24. Procédé selon l'une quelconque des revendications 19 à 22, **caractérisé en ce qu'**un des deux substrats **S1** ou **S2** est du poly(chlorure de vinyle) souple (PVC souple) et l'autre des deux substrats **S2** ou **S1** est un polycarbonate (PC) ou un copolymère d'acrylonitrile-butadiène-styrène (ABS) ou un mélange PC/ABS ou un matériau composite PC/ABS.

25. Procédé selon l'une quelconque des revendications 19 à 24, **caractérisé en ce que** le polymère de polyuréthane **P** solide à température ambiante, présentant des groupes isocyanate est préparé à partir d'au moins un polyisocyanate et d'au moins un polyol, en particulier un polyol solide à température ambiante, de préférence un polyester-polyol solide à température ambiante.

26. Procédé selon l'une quelconque des revendications 19 à 25, **caractérisé en ce que** l'aldimine **A** présente la formule (I-A) 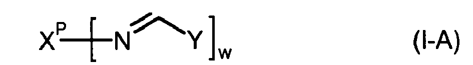 où
X^{P} représente une polyamine avec w groupes amino primaires après élimination de w groupes amino primaires ;
w représente un nombre entier de 2-8, en particulier de 2-4, de préférence 2 ou 3, et
Y représente le radical de formule (I a) ou (I b) 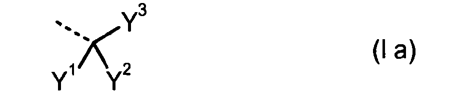 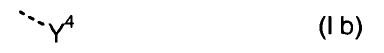 où
Y¹ et représentent soit, indépendamment l'un de l'autre, à chaque fois un radical hydrocarboné monovalent comprenant 1 à 12 atomes de carbone,
Y² soit ensemble un radical hydrocarboné divalent comprenant 4 à 20 atomes de carbone, qui fait partie d'un cycle carbocyclique, le cas échéant substitué, comprenant 5 à 8, de préférence 6, atomes de carbone ;
Y³ représente un radical hydrocarboné monovalent, qui présente le cas échéant au moins un hétéroatome, en particulier d'oxygène sous forme de groupes éther, carbonyle ou ester ; et
Y⁴ représente soit un groupe aryle ou hétéroaryle substitué ou non substitué, qui présente une taille de cycle entre 5 et 8, de préférence 6, atomes,
soit 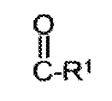 où R¹ représente un atome d'hydrogène ou un groupe alcoxy,
soit un groupe alcényle ou arylalcényle substitué ou non substitué comprenant 1-30 atomes de carbone.

27. Procédé selon la revendication 26, **caractérisé en ce que** la polyamine dérivée du radical X^{P} est choisie dans le groupe constitué par la 1,6-hexaméthylènediamine, le 1,5-diamino-2-méthylpentane (MPMD), le 1,3-diaminopentane (DAMP), le 1-amino-3-aminométhyl-3,5,5-triméthylCyclohexane (= isophoronediamine ou IPDA), la 2,2,4-triméthylhexaméthylènediamine et la 2,4,4-triméthylhexaméthylènediamine, la 4-aminométhyl-1,8-octanediamine, la 1, 3-xylylènediamine et la 1, 4-xylylènediamine, le 1,3-bis-(aminométhyl)cyclohexane et le 1 , 4-bis-(aminométhyl)cyclohexane, le bis-(4-aminocyclohexyl)-méthane, le bis-(4-amino-3-méthylcyclohexyl)-méthane, le 3(4),8(9)-bis-(aminométhyl)-tricycle[5,2,1,0^{2,6}]décane, le 1,2-diaminocyclohexane, le 1,3-diaminocyclohexane et le 1,4-diaminocyclohexane, les polyoxyalkylène-diamines et les polyoxyalkylène-triamines, ainsi que les mélanges de deux des polyamines susmentionnées ou plus.

28. Procédé selon l'une quelconque des revendications 19 à 25, **caractérisé en ce que** l'aldimine A présente la formule (I-B) 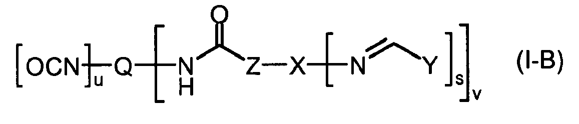 où
Q représente un radical d'un polyisocyanate présentant (u + v) groupes isocyanate en position terminale, après élimination de tous les groupes isocyanate ;
u représente 0 ou 1 ou 2 ;
v représente 1 ou 2 ou 3 ;
s représente 1 ou 2, de préférence 1 ;
Y représente le radical de formule (Ia) ou (Ib) 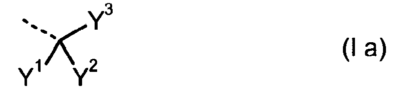 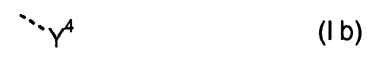 où
Y¹ et Y² représentent soit, indépendamment l'un de l'autre, à chaque fois un radical hydrocarboné monovalent comprenant 1 à 12 atomes de carbone,
soit ensemble un radical hydrocarboné divalent comprenant 4 à 20 atomes de carbone, qui fait partie d'un cycle carbocyclique, le cas échéant substitué, comprenant 5 à 8, de préférence 6, atomes de carbone ;
Y³ représente un radical hydrocarboné monovalent, qui présente le cas échéant au moins un hétéroatome, en particulier d'oxygène sous forme de groupes éther, carbonyle ou ester ;et
Y⁴ représente soit un groupe aryle ou hétéroaryle substitué ou non substitué, qui présente une taille de cycle entre 5 et 8, de préférence 6, atomes,
soit 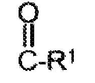 où R¹ représente un atome d'hydrogène ou un groupe alcoxy,
soit un groupe alcényle ou arylalcényle substitué ou non substitué comprenant 1-30 atomes de carboné :
et
X représente soit un radical hydrocarboné (s + 1)- valent, présentant le cas échéant des hétéroatomes, comprenant de préférence 2 à 20 atomes de carbone,
soit, lorsque Z représente N-R⁷, ensemble avec R⁷ un radical hydrocarboné (s + 2)-valent comprenant de préférence 3 à 20 atomes de carbone, qui contient le cas échéant au moins un hétéroatome, en particulier sous forme d'oxygène de fonction éther ou d'azote de fonction amine tertiaire ;
Z représente O, S, NH, NR² ou NR⁷,
où
R² représente
- soit un radical hydrocarboné monovalent comprenant 1 à 20 atomes de carbone, qui présente le cas échéant au moins un groupe ester d'acide carboxylique, nitrile, nitro, ester d'acide phosphonique, sulfone ou ester d'acide sulfonique,
- soit un substituant de formule (X), 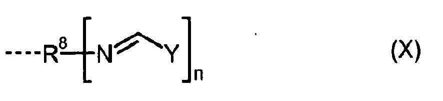 où
n représente 1 ou 2,
R⁸ représente un radical hydrocarboné (n + 1)- valent, qui contient le cas échéant des hétéroatomes, en particulier sous forme d'oxygène de fonction éther ou d'azote de fonction amine tertiaire, et le cas échéant de l'hydrogène actif sous forme de groupes hydroxyle, amino secondaire ou mercapto ;et
R⁷ représente ensemble avec X un radical hydrocarboné (s + 2)-valent comprenant de préférence 3 à 20 atomes de carbone, qui contient le cas échéant au moins un hétéroatome, en particulier sous forme d'oxygène de fonction éther ou d'azote de fonction amine tertiaire ;
à condition que u + (v * s) représente une valeur de 2 ≥.

29. Procédé selon la revendication 28, **caractérisé en ce que** Q représente un polymère de polyuréthane **PUP** présentant (u + v) groupes isocyanate en position terminale, après élimination de tous les groupes isocyanate, qui peut en particulier être obtenu par transformation d'au moins un polyol avec au moins un polyisocyanate, de préférence d'au moins un diol avec au moins un diisocyanate.

30. Procédé selon la revendication 29, **caractérisé en ce que** le polymère de polyuréthane **PUP** est un polymère de polyuréthane **PUP1** solide à température ambiante, présentant des groupes isocyanate.

31. Procédé selon l'une quelconque des revendications 28 à 30, **caractérisé en ce que** l'amine dérivée du radical X est choisie dans le groupe constitué par la N-méthyl-1,2-éthanediamine, la N-éthyl-1,2-éthanediamine, la N-cyclohexyl-1,2-éthanediamine, la N-méthyl-1,3-propanediamine, la N-éthyl-1,3-propanediamine, la N-butyl-1,3-propanediamine, la N-cyclohexyl-1,3-propanediamine, la 4-aminométhylpipéridine, la 3-(4-aminobutyl)-pipéridine, la diéthylènetriamine (DETA), la bishexaméthylènetriamine (BHMT), la dipropylènetriamine (DPTA), les diamines grasses telles que la N-alkyl-1,3-propanediamine de coco, la N-oléyl-1,3-propanediamine, la N-alkyl-1,3-propanediamine de soja et la N-alkyl-1,3-propanediamine de suif ;le 5-amino-1-pentanol, le 6-amino-1-hexanol, le 4-(2-aminoéthyl)-2-hydroxyéthylbenzène, le 3-aminométhyl-3,5,5-triméthylcyclohexanol, le 2-(2-aminoéthoxy)-éthanol, la triéthylèneglycolmonoamine, la 3-(2-hydroxyéthoxy)-propylamine, la 3- (2- (2-hydroxyéthoxy) -éthoxy) - propylamine et la 3-(6-hydroxyhexyloxy)-propylamine.

32. Procédé selon l'une quelconque des revendications 28 à 30, **caractérisé en ce que** Z représente NH et X représente le radical d'une diamine asymétrique comprenant deux groupes amino primaires après l'élimination de ces deux groupes amino.

33. Procédé selon la revendication 32, **caractérisé en ce que** la diamine asymétrique est choisie dans le groupe constitué par la 1,2-propanediamine, la 2-méthyl-1,2-propanediamine, la 1,3-butanediamine, le 1,3-diaminopentane (DAMP), la 2,2,4-triméthylhexaméthylènediamine (TMD), le 1,5-diamino-2-butyl-2-éthylpentane, le 1-amino-3-aminométhyl-3,5,5-triméthylcyclohexane (= isophoronediamine ou IPDA) et le 1,4-diamino-2,2,6-triméthylcyclohexane (TMCDA).

34. Procédé selon l'une quelconque des revendications 26 à 33, **caractérisé en ce que** Y représente le radical de formule (I a).

35. Procédé selon l'une quelconque des revendications 26 à 34, **caractérisé en ce que** Y¹ et Y² représentent à chaque fois méthyle.

36. Procédé selon l'une quelconque des revendications 26 à 35, **caractérisé en ce que** Y³ représente un radical de formule (II) ou (III), de préférence un radical de formule (III) 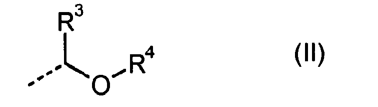 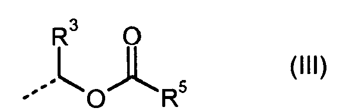 où
R³ représente un atome d'hydrogène ou un groupe alkyle ou arylalkyle, de préférence un atome d'hydrogène ;
R⁴ représente un radical hydrocarboné comprenant 1 à 30, en particulier 11 à 30, atomes de carbone, qui contient le cas échéant des hétéroatomes ;et
R⁵ représente
- soit un atome d'hydrogène,
- soit un radical alkyle linéaire ou ramifié comprenant 1 à 30, en particulier 11 à 30, atomes de carbone, le cas échéant avec des proportions cycliques et le cas échéant au moins un hétéroatome,
- soit un radical hydrocarboné linéaire ou ramifié, monoinsaturé ou polyinsaturé, comprenant 5 à 30 atomes de carbone,
- soit un cycle aromatique ou hétéroaromatique de 5 ou 6 chaînons, le cas échéant substitué.

37. Procédé selon l'une quelconque des revendications 19 à 36, **caractérisé en ce que** l'adhésif thermofusible **K** (5) est essentiellement exempt de plastifiants.

38. Objet, **caractérisé en ce qu'**il est obtenu par un procédé selon l'une quelconque des revendications 19 à 37.

39. Objet selon la revendication 38, **caractérisé en ce que** l'objet est un support contrecollé avec une feuille en PVC souple.
